# FASCICULE DE BREVET EUROPEEN

(11) **EP 3 743 652 B1**
(45) Date de publication et mention de la délivrance du brevet: **26.07.2023**
(21) Numéro de dépôt: 19710009.2
(22) Date de dépôt: 23.01.2019
(51) Int. Cl.: F17C 9/04

(54) **POMPE À CHALEUR CRYOGÉNIQUE ET SON UTILISATION POUR LE TRAITEMENT DE GAZ LIQUÉFIÉ**
KRYOGENE WÄRMEPUMPE UND VERWENDUNG DIESER ZUR BEHANDLUNG VON FLÜSSIGGAS
CRYOGENIC HEAT PUMP AND USE THEREOF IN THE TREATMENT OF LIQUEFIED GAS

(30) Priorité: 23.01.2018 FR 1850519
(43) Date de publication de la demande: 02.12.2020
(73) Titulaire: Gaztransport et Technigaz, 78470 Saint-Rémy-lès-Chevreuse (FR)
(72) Inventeur: AOUN, Bernard, 78470 Saint Remy Les Chevreuse (FR)
(74) Mandataire: Ex Materia
(86) Numéro de dépôt international: PCT/FR2019/050152
(87) Numéro de publication internationale: WO 2019/145643

(56) Documents cités:
- US-A1- 2008 302 113
- US-B1- 6 591 618
- US-B1- 9 261 295

## Description

### DOMAINE TECHNIQUE

L'invention concerne une pompe à chaleur pour une application cryogénique et son application pour un traitement de gaz liquéfié, par exemple dans un navire de transport de gaz naturel liquéfié. Elle concerne également un dispositif de traitement de gaz liquéfié, un navire comportant un tel dispositif, ainsi que des procédés de traitement. On entend par traitement, par exemple le refroidissement et/ou le réchauffement de gaz liquéfié. Par ailleurs, le gaz liquéfié peut être un gaz naturel liquéfié, comportant majoritairement du méthane, ou bien un autre gaz liquéfié tel que de l'éthane, du propane, du butane, du GPL, etc.

### ETAT DE L'ART

L'art antérieur comprend les documents US-B1-9 261 295, US-B1-6 591 618 et US-A1 -2008/302113.

Afin de transporter plus facilement du gaz, tel que du gaz naturel, sur de longues distances, le gaz est généralement liquéfié (pour devenir du gaz naturel liquéfié - GNL) en le refroidissant à des températures cryogéniques, par exemple -163°C à la pression atmosphérique. Le gaz liquéfié est ensuite chargé dans des navires spécialisés.

Dans un navire de transport de gaz liquéfié, par exemple du type méthanier, des machines sont prévues pour pourvoir aux besoins énergétiques du fonctionnement du navire, notamment pour la propulsion du navire et/ou la production d'électricité pour les équipements de bord. Ces machines sont en général des machines thermiques qui consomment du gaz que l'on alimente à partir de la cargaison de gaz liquéfié transportée dans les cuves du navire.

Afin de limiter l'évaporation du gaz liquéfié des cuves, il est connu de le stocker sous pression de manière à se déplacer sur la courbe d'équilibre liquidevapeur du gaz liquéfié considéré, augmentant ainsi sa température de vaporisation. Le gaz liquéfié peut ainsi être stocké à des températures plus importantes ce qui a pour effet de limiter l'évaporation du gaz.

L'évaporation naturelle du gaz est toutefois inévitable, ce phénomène étant appelé NBOG qui est l'acronyme de l'anglais *Natural Boil-Off Gas* (par opposition à l'évaporation forcée de gaz ou FBOG, acronyme de l'anglais *Forced Boil-Off Gas*). Le gaz qui s'évapore naturellement dans le réservoir d'un navire est en général utilisé pour alimenter les machines précitées. Dans le cas (premier cas) où la quantité de gaz évaporé naturellement est insuffisante pour la demande en gaz combustible des machines, une pompe immergée dans la cuve est actionnée pour fournir davantage de gaz combustible après évaporation forcée. Dans le cas (second cas) où la quantité de gaz évaporé est trop importante par rapport à la demande des machines, l'excédent de gaz est en général brûlé dans une chaudière, ce qui représente une perte en gaz combustible.

Dans la technique actuelle, le perfectionnement des réservoirs sont tels que les taux d'évaporation naturelle (BOR - acronyme du *Boil-Off Rate*) des gaz liquéfiés sont de plus en plus faibles, alors que les machines d'un navire sont de plus en plus performantes. Ceci a pour conséquence, dans chacun des premier et second cas précités, que l'écart est très important entre la quantité de gaz naturellement produit par évaporation et celle demandée par l'installation d'un navire.

Par conséquent, il existe un intérêt croissant pour des solutions de refroidissement du gaz liquéfié contenu dans une cuve de stockage et de gestion du BOG généré dans cette cuve, comme par exemple des unités de reliquéfaction ou de refroidissement.

La présente invention apporte notamment une solution à ce besoin.

### EXPOSE DE L'INVENTION

Un mode de réalisation de l'invention concerne une pompe à chaleur cryogénique pour un dispositif de traitement de gaz liquéfié, comportant en circuit fermé au moins un compresseur, au moins un détendeur, un premier circuit de réception de froid s'étendant entre ledit au moins un compresseur et ledit au moins un détendeur, et un deuxième circuit de transmission de froid s'étendant entre ledit au moins un détendeur et ledit au moins un compresseur, ledit circuit fermé comportant un fluide cryogénique configuré pour être dans un état diphasique dans au moins une partie de ce circuit, ledit deuxième circuit de transmission de froid étant configuré pour faire circuler ledit fluide à une température inférieure ou égale à - 40°C.

Dans la présente demande, on entend par « cryogénique » une température très basse et en particulier inférieure à -40°C, voire inférieure à-90°C, et de préférence inférieure à -160°C. Un fluide ou une pompe à chaleur cryogénique est ainsi un fluide ou une pompe apte à être à ou fonctionner à une telle basse température.

La température qui est inférieure ou égale à -40°C faisant l'objet de l'invention est celle du fluide cryogénique de la pompe à chaleur et elle est mesurée ou estimée à la sortie immédiate du circuit de transmission de froid.

Une pompe à chaleur est une unité bien connue en soi mais pas pour une application cryogénique. Une pompe à chaleur comprend classiquement en circuit fermé un compresseur, un détendeur, et des circuits d'échange de chaleur s'étendant entre le compresseur et le détendeur. Le compresseur comprime un fluide réfrigérant ou cryogénique, ce qui augmente sa température, ce fluide réchauffé pouvant transmettre sa chaleur dans un des circuits précités. En sortie de ce circuit, le fluide est détendu dans le détendeur, ce qui diminue sa température, ce fluide refroidi pouvant absorber de la chaleur dans l'autre des circuits puis réalimente le compresseur.

L'invention propose d'utiliser cette technologie connue en utilisant un fluide cryogénique et en configurant les différents éléments constitutifs de la pompe de façon à ce que l'un des circuits, appelé premier circuit, soit un circuit de réception de froid et donc de réchauffement (le fluide circulant dans ce circuit ayant par exemple une température supérieure à -160°C, et par exemple comprise entre -115°C et 45°C), et l'autre des circuits, appelé deuxième circuit, soit un circuit de transmission de froid et qui peut être recherché pour réaliser un sous-refroidissement voire un léger réchauffement. Le fluide circulant dans ce deuxième circuit est par exemple à une température comprise entre -169°C et - 161°C pour le cas d'un circuit de sous-refroidissement, et à une température comprise entre -165°C et -160°C pour le cas d'un circuit de faible réchauffement. Le fluide circule ainsi dans ce circuit à une température inférieure ou égale à - 160°C. C'est le cas lorsque le fluide à refroidir est du GNL composé principalement de méthane. Dans le cas où le GNL à refroidir serait composé principalement d'éthane, le fluide cryogénique circulerait dans le deuxième circuit a une température inférieure ou égale à -90°C. Dans le cas où le GNL à refroidir serait composé principalement de propane et de butane, le fluide cryogénique circulerait ainsi dans le deuxième circuit à une température inférieure ou égale à -40°C.

La pompe peut comprendre une ou plusieurs des caractéristiques suivantes, prises isolément les unes des autres ou en combinaison les unes avec les autres :
- ledit premier circuit est configuré pour permettre la circulation dudit fluide depuis ledit au moins un compresseur jusqu'audit au moins un détendeur,
- ledit deuxième circuit est configuré pour permettre la circulation dudit fluide depuis ledit au moins un détendeur jusqu'audit au moins un compresseur,
- la sortie dudit premier circuit et le détendeur, d'une part, et la sortie dudit deuxième circuit et le compresseur, d'autre part, sont reliés par au moins des troisième et quatrième circuits d'échanges mutuels de chaleur,
- la sortie dudit quatrième circuit est reliée par un dixième circuit audit compresseur, ce dixième circuit étant configuré pour transmettre du froid audit premier circuit,
- lesdits circuits font partie d'un même échangeur de chaleur, ou de deux ou trois échangeurs de chaleur distincts,
- ledit fluide cryogénique est choisi parmi l'azote, le méthane, l'oxygène, l'éthane, l'éthylène, le butane, l'isobutane, le propane, l'isopropane, l'argon ou un mélange de ces gaz,
- ledit compresseur est apte à comprimer du gaz destiné à alimenter en gaz au moins une machine dudit navire, ledit compresseur étant en outre relié par des vannes aux circuits et à ladite au moins une machine de façon à pouvoir l'isoler de la machine, lorsqu'il fonctionne pour la pompe à chaleur, et à l'isoler de la pompe à chaleur, lorsqu'il fonctionne pour ladite au moins une machine,
- ledit premier circuit de réception de froid est configuré pour avoir en entrée une température du fluide cryogénique inférieure ou égale à -90°C, et de préférence inférieure ou égale à -160°C, et/ou en sortie une température supérieure ou égale à 0°C, et de préférence supérieure ou égale à 25°C,
- ledit deuxième circuit de transmission de froid est configuré pour avoir en sortie une température du fluide cryogénique inférieure ou égale à -90°C, et de préférence inférieure ou égale à -160°C.

La présente invention concerne un dispositif de traitement de gaz liquéfié tel que défini dans la revendication1.

Dans la présente demande, on entend par un traitement de gaz liquéfié par exemple le refroidissement et/ou le réchauffement de ce gaz liquéfié. On entend par échange de chaleur, la réception ou la transmission de chaleur ou bien la réception ou la transmission de froid.

L'invention permet de faire des économies significatives d'énergie car le réchauffement du BOG et le refroidissement voire aussi le réchauffement du GNL sont assurés par une pompe à chaleur qui est plus performante que les unités aujourd'hui connues et utilisées pour réaliser ces fonctions. L'invention peut par exemple permettre de ne pas utiliser d'eau de mer pour refroidir le BOG avant son utilisation par des machines du navire.

Le dispositif selon l'invention peut comprendre une ou plusieurs des caractéristiques suivantes, prises isolément les unes des autres ou en combinaison les unes avec les autres :
- une sortie dudit septième circuit est destinée à être reliée à une entrée de gaz liquéfié de ladite cuve, et de préférence à au moins une rampe de pulvérisation de gaz liquéfié en partie haute de la cuve et/ou à au moins un moyen d'injection dudit gaz liquéfié en fond de cette cuve,
- une sortie dudit cinquième circuit et/ou une sortie dudit sixième circuit sont reliées à au moins un compresseur destiné à alimenter en gaz au moins une machine d'un navire de transport de gaz liquéfié, telle que par exemple un moteur de propulsion dudit navire, une génératrice électrique, et/ou une chaudière,
- une sortie dudit compresseur configuré pour alimenter en gaz au moins une machine, est reliée à un huitième circuit d'échange de chaleur avec ledit premier circuit et/ou ledit cinquième circuit et/ou ledit sixième circuit,
- une sortie dudit huitième circuit est reliée à une entrée d'un neuvième circuit d'échange de chaleur avec ledit deuxième circuit et/ou ledit septième circuit,
- ledit au moins un compresseur est relié par des vannes respectivement à la sortie du cinquième circuit et/ou du sixième circuit, et à ladite au moins une machine, ainsi que par des vannes respectivement aux premier et second circuits,
- ledit au moins un compresseur est relié directement à l'entrée d'un onzième circuit configuré pour échanger de la chaleur avec ledit deuxième circuit et/ou ledit septième circuit,
- lesdits circuits font partie d'un même échangeur de chaleur, ou de plusieurs échangeurs de chaleur distincts,
- le dispositif comprend un échangeur comportant au moins, voire uniquement, lesdits premier, cinquième et dixième circuits,
- le dispositif comprend un échangeur comportant au moins, voire uniquement, lesdits troisième et quatrième circuits,
- le dispositif comprend un échangeur comportant au moins, voire uniquement, lesdits second et septième circuits,
- la pompe à chaleur est configurée de façon à ce que, en sortie dudit détendeur, le fluide cryogénique ait une température inférieure d'au moins 3°C à la température du gaz liquéfié entrant dans ledit septième circuit.

La présente invention concerne également un navire de transport de gaz liquéfié, comportant au moins une cuve de stockage de ce gaz et un dispositif tel que décrit ci-dessus.

La présente invention concerne également un procédé de refroidissement et/ou de réchauffement de gaz liquéfié stocké dans un navire tel que défini dans la revendication 19 et décrit ci-dessus, comprenant les étapes consistant à :
a) prélever du gaz liquéfié de la cuve et le faire circuler dans ledit septième circuit afin de modifier sa température, puis
b) réinjecter ce gaz liquéfié dans la cuve, en partie haute et/ou en fond de cuve.

Le procédé selon l'invention peut comprendre une ou plusieurs des caractéristiques ou étapes suivantes, prises isolément les unes des autres ou en combinaison les unes avec les autres :
c) prélever du gaz d'évaporation naturelle de la cuve et le faire circuler dans ledit cinquième circuit afin d'augmenter sa température, et
d) prélever du gaz liquéfié de la cuve et le faire circuler dans ledit sixième circuit afin de le vaporiser et d'augmenter sa température,
   et/ou
e) alimenter ledit au moins un compresseur configuré pour alimenter en gaz au moins une machine dudit navire, avec du gaz sortant dudit cinquième circuit et/ou dudit sixième circuit, et
f) prélever éventuellement une partie du gaz en sortie dudit au moins un compresseur et faire circuler ce gaz dans ledit huitième circuit, voire dans ledit neuvième circuit, afin de le refroidir,
   et/ou
g) faire circuler le gaz sortant dudit huitième circuit dans ledit neuvième circuit afin de le refroidir.

Selon un premier mode de fonctionnement, les étapes a), b), c) et d) sont réalisées simultanément lorsque ledit navire est à un haut régime, correspondant par exemple à une vitesse supérieure à un seuil prédéterminé, du gaz liquéfié étant réinjecté en fond de cuve à l'étape b).

Selon un second mode de fonctionnement, les étapes a), b) et c) sont réalisées simultanément lorsque ledit navire est à un régime de croisière, correspondant par exemple à une vitesse de croisière, du gaz liquéfié étant réinjecté en fond de cuve à l'étape b).

Selon un troisième mode de fonctionnement, les étapes a), b) et c) sont réalisées simultanément lorsque ledit navire est à un bas régime, correspondant par exemple à une vitesse inférieure à un seuil prédéterminé, du gaz liquéfié étant réinjecté en partie haute de la cuve à l'étape b).

Selon un quatrième mode de fonctionnement, les étapes a), b), c), e), f) et g) sont réalisées simultanément lorsque ledit navire est à un faible régime, correspondant par exemple à une vitesse très inférieure à un seuil prédéterminé, du gaz liquéfié circulant dans ledit septième circuit en vue de son réchauffement et son mélange avec du gaz sortant dudit neuvième circuit, avant sa réinjection dans la cuve à l'étape b), de préférence en fond de cuve.

Selon un cinquième mode de fonctionnement, les étapes a), b), c) et e) sont réalisées simultanément lorsque ledit navire est à un faible régime, correspondant par exemple à une vitesse très inférieure à un seuil prédéterminé, du gaz liquéfié étant réinjecté en partie haute de la cuve à l'étape b).

Le procédé peut comprendre en outre :
- une étape d'utilisation d'au moins un compresseur pour comprimer du gaz en vue de l'alimentation en gaz d'au moins une machine du navire, et
- une étape d'utilisation du même au moins un compresseur pour comprimer du fluide cryogénique dans la pompe à chaleur.

La présente invention concerne également un procédé de traitement de gaz d'une installation de stockage de gaz, en particulier embarquée sur un navire, le procédé comprenant les étapes suivantes :
- extraction d'une portion d'un premier gaz à l'état liquide d'une cuve,
- un premier sous-refroidissement de la portion du premier gaz à l'état liquide, et
- stockage du premier gaz à l'état liquide sous-refroidi en partie inférieure de la cuve de manière à constituer une couche de réserve de froid du premier gaz à l'état liquide au fond de la cuve.

Le procédé selon l'invention peut comprendre une ou plusieurs des caractéristiques ou étapes suivantes, prises isolément les unes des autres ou en combinaison les unes avec les autres :
- le premier gaz stocké dans la couche de réserve de froid de la cuve est utilisé pour refroidir le premier gaz à l'état de vapeur située en partie supérieure de la cuve et du premier gaz à l'état liquide,
- le premier gaz stocké dans la couche de réserve de froid est pulvérisé dans la cuve et dans la couche du premier gaz à l'état de vapeur,
- le premier gaz stocké dans la couche de réserve de froid est extrait du fond de la cuve et reliquéfie le premier gaz à l'état de vapeur à travers un échangeur de chaleur,
- ladite partie inférieure s'étend sur environ moins de 30% de la hauteur de la cuve mesurée depuis son fond, ledit fond étant l'extrémité la plus inférieure de la cuve,
- le premier gaz sous-refroidi est stocké dans la couche de réserve de froid à une température comprise -45° et -55°C à pression atmosphérique,
- le premier gaz à l'état liquide restant dans la cuve est à une température supérieure à -42°C,
- le premier gaz est un gaz naturel liquéfié.

La présente invention concerne encore un système de traitement de gaz d'une installation de stockage de gaz, en particulier embarquée sur un navire, le système comprenant :
- une cuve dans laquelle est stocké un premier gaz à l'état liquide,
- un premier échangeur de chaleur configuré pour réaliser un premier sous-refroidissement du premier gaz extrait de la cuve par une première canalisation,
- la première canalisation débouchant en partie inférieure de la cuve de manière à stocker le premier gaz sous-refroidi au fond de la cuve pour constituer une couche de réserve de froid du premier gaz à l'état liquide.

Le système peut comprendre une ou plusieurs des caractéristiques suivantes, prises isolément les unes des autres ou en combinaison les unes avec les autres :
- la cuve comprend une sortie connectée à une première extrémité d'une tuyauterie, la tuyauterie comprenant une deuxième extrémité couplée à une rampe de pulvérisation installée en partie supérieure de la cuve,
- le système comprend un réchauffeur installé sur la deuxième canalisation dans laquelle circule le deuxième gaz réchauffé ou vaporisé dans le premier échangeur de chaleur,
- le premier gaz est un gaz naturel liquéfié.

L'invention concerne également un navire, en particulier de transport de gaz liquéfié, comportant au moins un système du type précité.

### BREVE DESCRIPTION DES FIGURES

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- les figures 1 à 20 montrent plusieurs variantes de réalisation de l'invention, et
- les figures 21 et 22 montrent des diagrammes d'évolution de la température en fonction de l'entropie d'un fluide cryogénique circulant dans une pompe à chaleur selon l'invention, ainsi que la courbe de saturation d'un gaz naturel liquéfié qui est ici principalement du méthane,
- les figures 23 et 24 montrent des diagrammes d'évolution de la température en fonction de l'entropie d'un fluide cryogénique circulant dans une pompe à chaleur selon l'invention, ainsi que la courbe de saturation d'un gaz naturel liquéfie qui est ici principalement de l'éthane,
- les figures 25 et 26 montrent des diagrammes d'évolution de la température en fonction de l'entropie d'un fluide cryogénique circulant dans une pompe à chaleur selon l'invention, ainsi que la courbe de saturation d'un gaz naturel liquéfie qui est ici principalement du propane et du butane, et
- les figures 27 à 34 montrent d'autres variantes de réalisation de l'invention.

### DESCRIPTION DETAILLEE

L'invention utilise une pompe à chaleur cryogénique c'est-à-dire une unité apte à transférer de l'énergie thermique à des températures cryogéniques proches de la température de stockage d'un GNL.

La pompe à chaleur se présente sous la forme d'un circuit fermé et est désignée par la référence 10 dans les différents dessins. La pompe à chaleur 10 comprend quatre éléments essentiels à savoir au moins un compresseur 12, au moins un détendeur 14, un premier circuit 16 de réception de froid s'étendant entre le compresseur et le détendeur, et un deuxième circuit 18 de transmission de froid s'étendant entre le détendeur et le compresseur.

Un fluide cryogénique, choisi par exemple parmi de l'azote, du méthane et de l'oxygène, de l'éthane, de l'éthylène, du butane, de l'isobutane, du propane, de l'isopropane, de l'argon ou un mélange de ces gaz, circule dans la pompe à chaleur. Ce fluide est destiné à être à l'état gazeux ou à l'état diphasique dans le circuit. Le fluide circule par exemple à l'état gazeux dans le compresseur 12 et dans le premier circuit 16. Il est de préférence à l'état diphasique en sortie du détendeur et dans le deuxième circuit 18.

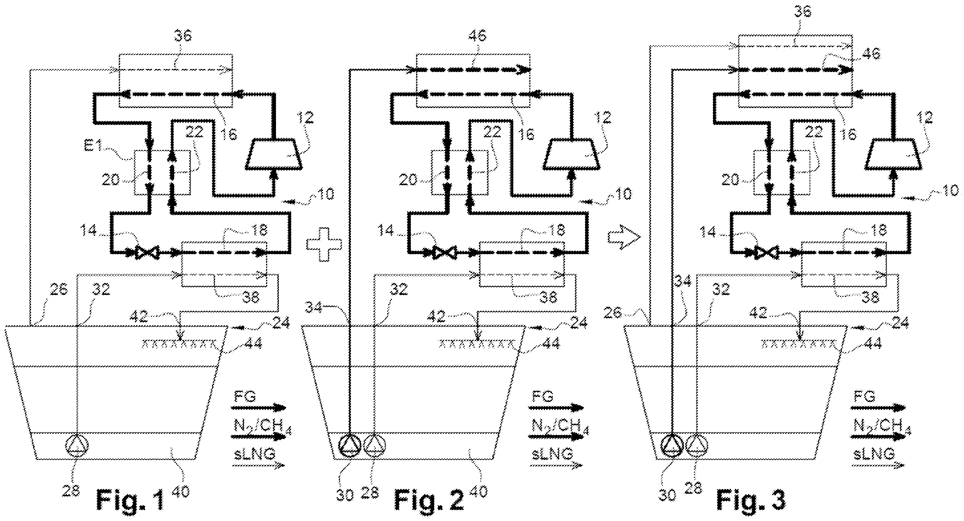

Le fluide est destiné à être porté à une température cryogénique, c'est-à-dire jusqu'à une température très basse inférieure à -160°C dans le cas où le GNL à refroidir est principalement composé de méthane. Les exemples illustrés par les figures 1 à 20 illustrent l'invention dans le cadre d'un GNL composé principalement de méthane, mais l'invention s'applique aussi à du GNL composé principalement ou majoritairement d'éthane, de butane et/ou de propane.

Afin de renforcer les performances de la pompe à chaleur 10, celle-ci peut comprendre d'autres circuits 20, 22 d'échange de chaleur. Ainsi, la sortie du premier circuit 16 et le détendeur 14 sont reliés par un troisième circuit 20 d'échange de chaleur, et la sortie du deuxième circuit 18 et le compresseur 12, sont reliés par un quatrième circuit 22 d'échange de chaleur.

Les deux circuits 20, 22 peuvent faire partie d'un même échangeur de chaleur E1 et sont configurés pour s'échanger mutuellement des calories, le fluide étant refroidi par circulation dans le troisième circuit, et réchauffé par circulation dans le quatrième circuit.

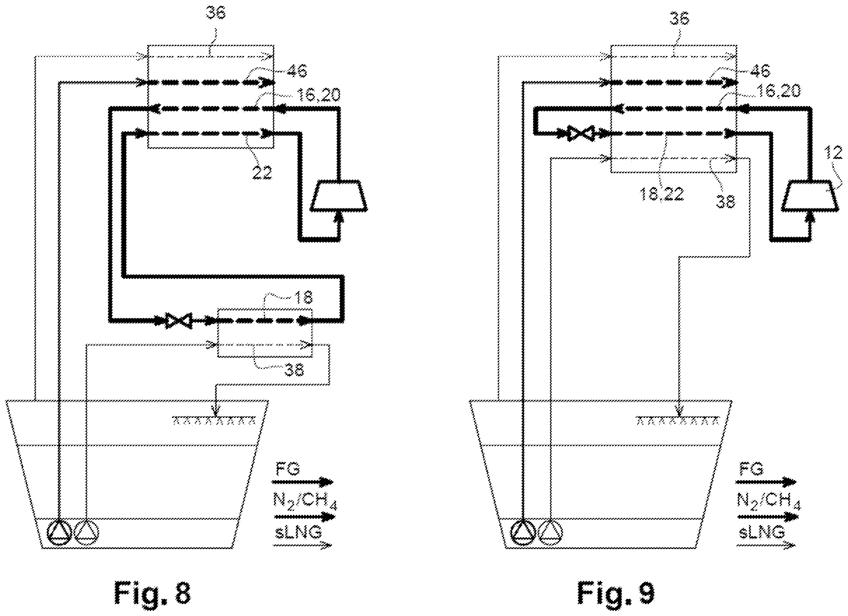

De la même façon, comme cela est représenté à la figure 8, le premier circuit 16 peut être intégré à l'échangeur comportant les circuits 20, 22. Dans ce cas, les circuits 16, 20 peuvent être mutualisés et donc confondus. Dans la variante de réalisation de la figure 9, le deuxième circuit 18 est également intégré à l'échangeur comportant les circuits 16, 20, 22. Dans ce cas, les circuits 16, 20, d'une part, et les circuits 18, 22, d'autre part, sont mutualisés et confondus. Dans encore une autre variante non représentée, le deuxième circuit 18 serait intégré à l'échangeur comportant les circuits 20, 22, et le circuit 16 resterait distant et indépendant.

Dans le mode de réalisation de la figure 3 par exemple, le fluide cryogénique subit un seul échange de chaleur en vue de son réchauffement, dans le circuit 22 de l'échangeur E1, avant d'être comprimé dans le compresseur 12. Au contraire, dans la variante de réalisation de la figure 9, le fluide cryogénique subit l'équivalent de deux échanges de chaleur en vue de son réchauffement, dans les circuits 18, 22 de l'échangeur unique, avant d'être comprimé par le compresseur 12.

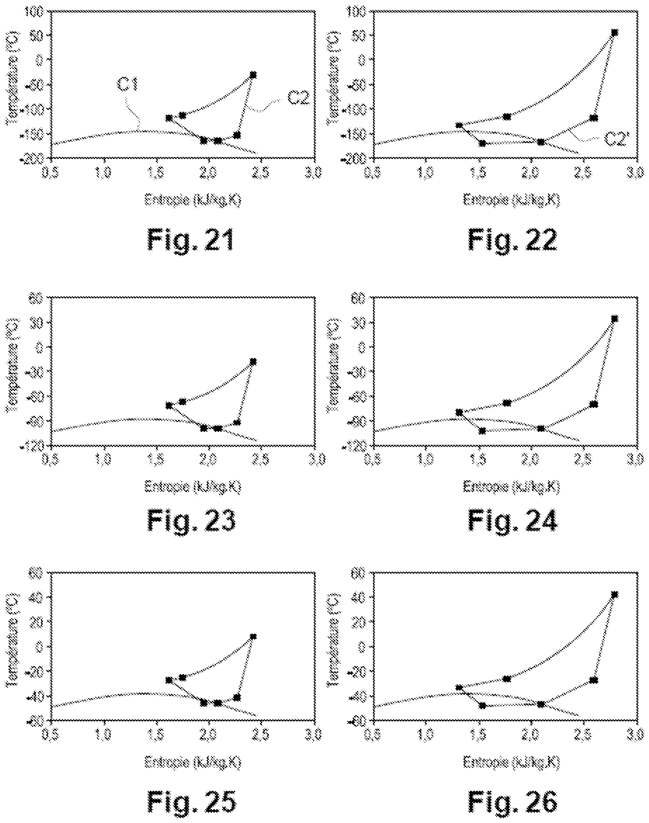

Les figures 21 à 26 montrent l'avantage de l'utilisation des circuits 20, 22 additionnels dans la pompe à chaleur 10.

Dans chacune de ces figures 21 à 26, la courbe incurvée (référencée C1 à la figure 21) est la courbe de saturation d'un GNL, qui est principalement du méthane dans les figures 21 et 22, de l'éthane aux figures 23 et 24, et un mélange de propane et de butane aux figures 25 et 26.

La courbe représentant un cycle thermodynamique (référencée C2 ou C2' aux figures 21 et 22) montre l'évolution de la température d'un fluide cryogénique, tel que de l'azote, en fonction de l'entropie. Dans la figure 21, ainsi que dans les figures 23 et 25, la pompe à chaleur est dépourvue des circuits 20, 22, et dans la figure 22, ainsi que dans les figures 24 et 26, la pompe à chaleur comprend de tels circuits 20, 22. On constate que les circuits additionnels 20 et 22 permettent de modifier la courbe d'hystérésis. A une entropie donnée, le refroidissement est plus efficace si la température du fluide cryogénique est nettement inférieure à la température du GNL à refroidir, pour une même entropie sur la courbe de saturation de ce GNL. Pour les différents GNL listés ci-dessus, on constate que les circuits 20, 22 permettent, pour une large plage de valeurs d'entropie, de garantir une différence de températures significative entre la température la plus froide du fluide cryogénique, lorsqu'il sort du détendeur, et la température du GNL à refroidir. Cette différence de températures est de préférence d'au moins 3°C. Plus la différence de températures est importante, et plus le débit du fluide dans la pompe à chaleur peut être minimisé. En conclusion, les circuits 20, 22 augmentent les performances de la pompe à chaleur.

Le ou les échangeurs utilisés sont par exemple du type à tubes et calandres, à plaques, etc.

Le compresseur 12 a par exemple un taux de compression entre 10 et 20% et un débit compris entre 200 et 2000 m³/h.

Le détendeur 14 a par exemple un taux de détente entre 10 et 20% et un débit compris entre 200 et 2000 m³/h. Le détendeur est par exemple une vanne Joule-Thomson.

Dans un exemple particulier de réalisation de l'invention :
- la température en sortie du compresseur est comprise entre 30 et 60°C et est par exemple de l'ordre de 45°C,
- la température en sortie du premier circuit 16 est comprise entre -130°C et -100°C, et est par exemple de l'ordre de -115°C,
- la température en sortie du détendeur 14 est comprise entre -160°C et - 200°C, et est par exemple de l'ordre de -170°C, et
- la température en sortie du deuxième circuit 18 est comprise entre -160°C et -200°C, et est par exemple de l'ordre de -170°C.

Dans l'exemple de réalisation de la figure 1, la pompe à chaleur 10 est intégrée à un navire de transport de gaz naturel liquéfié (GNL) qui comprend au moins une cuve 24 de stockage de GNL.

Typiquement, une cuve 24 de GNL comprend du GNL en phase liquide et du GNL en phase gazeuse, ce dernier résultant de l'évaporation naturelle du GNL dans la cuve. Le gaz d'évaporation naturelle est appelé BOG ou NBOG.

La cuve 24 comprend une sortie de BOG 26, qui est logiquement située dans une partie haute de la cuve où s'accumule naturellement le BOG. La cuve est en outre équipée d'un système de pompage comportant une ou plusieurs pompes 28, 30 qui sont immergées dans le GNL. La cuve 24 de la figure 1 est équipée d'une pompe 28 et celle de la figure 2 est équipée de deux pompes 28, 30. La ou chaque pompe est reliée à une sortie de gaz liquéfié 32, 34 de la cuve.

Dans l'exemple représenté, la sortie de BOG 26 est reliée à un cinquième circuit 36 d'échange de chaleur avec le premier circuit 16, et la sortie de GNL 32 est reliée à un septième circuit 38 d'échange de chaleur avec le deuxième circuit 18.

Compte tenu de ce qui précède, selon la température du fluide dans le circuit 18, on comprend que le GNL pourra être sous-refroidi ou réchauffé dans le circuit 38. Par exemple, dans le cas où le GNL aurait en entrée du circuit 38 une température comprise entre -165 et -161°C, il aurait en sortie une température comprise entre -170 et -160°C. On comprend en outre que le BOG, qui a une température comprise entre -140 et -120°C, et par exemple de l'ordre de -120°C, pourra être réchauffé dans le circuit 36, par exemple jusqu'à une température comprise entre 0 et 45°C, et par exemple de l'ordre de 25°C.

La température du GNL dans la cuve peut varier entre une valeur minimale (-165°C) et une valeur maximale (-161°C). Le GNL le plus froid se stocke naturellement en fond de cuve et est représentée par la couche 40 en fond de cuve. La ou chaque pompe 28, 30 peut pomper dans la couche 40 la plus froide, ou peut être située en fond de cuve pour pouvoir, dans la mesure du possible, prélever du GNL le plus froid possible.

Dans le cas où du GNL froid à -165°C par exemple serait prélevé, ce GNL pourrait circuler dans le circuit 38 pour refroidir le fluide dans le circuit 18, et être donc réchauffé par le fluide du circuit 18. Dans le cas où du GNL moins froid serait prélevé, par exemple à -161°C, ce GNL pourrait circuler dans le circuit 38 pour réchauffer le fluide dans le circuit 18, et être donc refroidi par le fluide du circuit 18.

Dans le cas représenté à la figure 1, du GNL froid est prélevé dans la couche inférieure 40 et est légèrement réchauffé par circulation dans le circuit 38. Il ressort par exemple à une température de l'ordre de -160°C et peut être réinjecté dans la cuve 24.

La cuve 24 comprend aussi au moins une entrée de GNL 42 qui est reliée à la sortie du septième circuit 38 et qui est également reliée ici à une rampe de pulvérisation 44 située à l'intérieur de la cuve, dans sa partie haute, au-dessus du niveau maximum de GNL dans la cuve. De façon connue, du GNL est pulvérisé à l'état liquide dans le BOG de la cuve de façon à le refroidir et à le recondenser/reliquéfier.

Dans la variante de réalisation de la figure 2, les éléments identiques sont référencés par les mêmes chiffres. Cette variante se distingue de la précédente variante essentiellement en ce que la sortie de BOG n'est pas représentée. La seconde pompe évoquée dans ce qui précède est reliée à une sortie de GNL 34 qui est reliée à un sixième circuit 46 d'échange de chaleur avec le premier circuit 16.

Les deux pompes 28, 30 pompent le GNL dans la couche 40 la plus froide et sont par exemple situées en fond de cuve pour prélever du GNL dans ladite couche 40. Dans ce cas, le GNL envoyé au circuit 46 aura une température inférieure ou égale à -160°C et il sortira réchauffé de ce circuit avec une température comprise entre 0 et 45°C et par exemple de l'ordre de 25°C.

La variante de la figure 3 représente une combinaison des variantes des figures 1 et 2. On y retrouve les deux circuits 36, 46, qui échangent de la chaleur entre eux ainsi qu'avec le premier circuit 16. On comprend ainsi que le BOG et le GNL circulant respectivement dans les circuits 36, 46 seront réchauffés alors que le fluide circulant dans le circuit 16 sera refroidi.

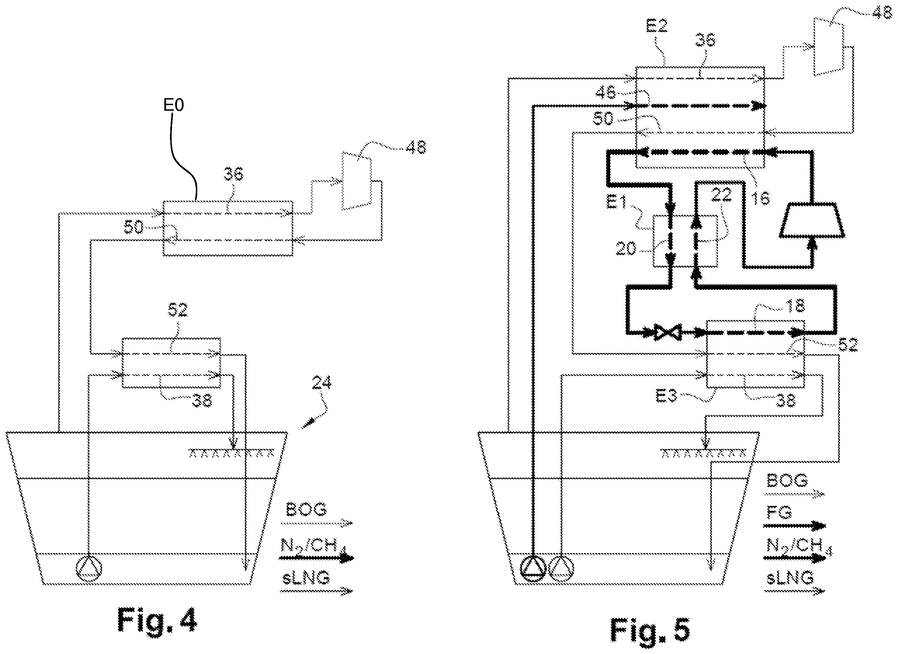

La figure 4 représente une installation de recondensation de GNL dans un navire de transport. Le BOG sortant du circuit 36 alimente un compresseur 48 configuré pour alimenter en gaz au moins une machine du navire, telle que par exemple un moteur de propulsion dudit navire, une génératrice électrique, et/ou une chaudière. Le gaz (BOG) comprimé et qui n'est pas utilisé par les machines peut être refroidi et reliquéfié avant d'être réinjecté dans la cuve 24. Au moins un échangeur de chaleur E0 est utilisé pour réchauffer le BOG avant l'alimentation du compresseur 48 et pour refroidir et reliquéfier le gaz sortant du compresseur avant sa réintroduction dans la cuve 24.

L'installation comprend ainsi un huitième circuit 50 d'échange de chaleur avec le cinquième circuit 36 de l'échangeur de chaleur E0, et un neuvième circuit 52 d'échange de chaleur avec le septième circuit 38.

Le système de recondensation de la figure 4 comprend un compresseur 48. Le BOG comprimé peut être en entrée du huitième circuit 50 à une température comprise entre 20 et 60°C, et par exemple de l'ordre de 45°C, et le BOG en entrée du neuvième circuit 52 peut être à une température comprise entre -130 et -90°C et par exemple de l'ordre de -110°C. En sortie du neuvième circuit 52, le BOG, reliquéfié, peut être à une température inférieure ou égale à - 160°C. Ce gaz liquéfié peut être réinjecté en fond de cuve 24.

La variante de la figure 5 représente la combinaison de la variante de la figure 3 avec l'installation de recondensation telle que représentée à la figure 4.

Dans l'exemple représenté, trois échangeurs de chaleur E1, E2, E3 sont utilisés mais il pourrait y en avoir plus ou moins. Un premier échangeur de chaleur E1 est celui de la pompe à chaleur. Dans un second échangeur de chaleur E2, le cinquième circuit 36, le sixième circuit 46, le huitième circuit 50 et le premier circuit 16 coopèrent de façon à réchauffer le BOG avant l'alimentation du compresseur 48 et refroidir le BOG en excès, c'est-à-dire non utilisé par la une machine du navire. Dans un troisième échangeur de chaleur E3, le deuxième circuit 18, le septième circuit 38 et le neuvième circuit 52 coopèrent de façon à refroidir le BOG obtenu ci-dessus, ainsi qu'à refroidir ou réchauffer le GNL prélevé de la cuve, comme on le verra dans ce qui suit.

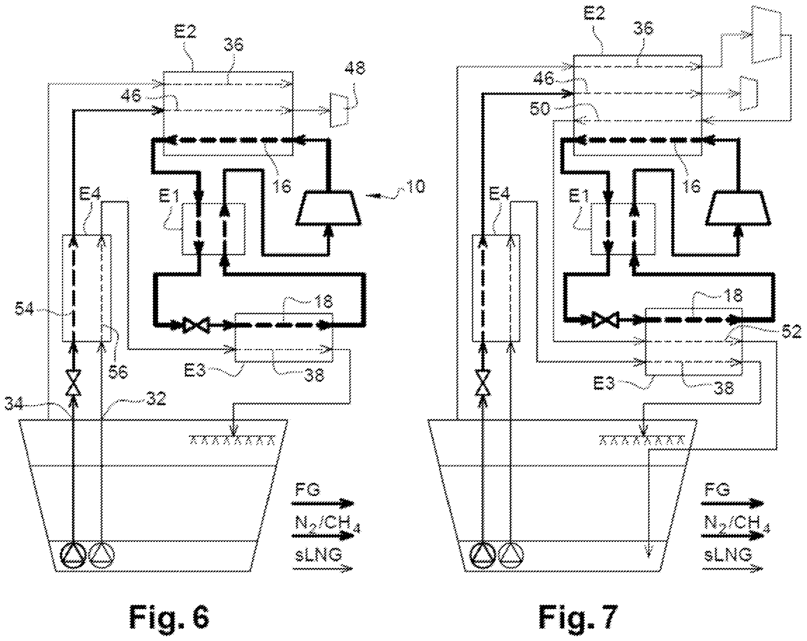

Les variantes des figures 6 et 7 comprennent un quatrième échangeur de chaleur E4. Dans le cas de la figure 6, le quatrième échangeur de chaleur E4 comprend un premier circuit d'échange de chaleur 54 intercalé entre la sortie de GNL 34 et le sixième circuit 46, et un second circuit d'échange de chaleur 56 intercalé entre la sortie de GNL 32 et le septième circuit 38. La sortie de GNL 34 peut être reliée à l'entrée du premier circuit d'échange de chaleur 54 par un détendeur. L'échangeur E2 comprend le premier circuit 16, le cinquième circuit 36 et le sixième circuit 46, et l'échangeur de chaleur E3 comprend le deuxième circuit 18 et le septième circuit 38. On comprend que le GNL qui circule dans le premier circuit d'échange de chaleur 54 est préalablement détendu et est donc plus froid que le GNL qui circule dans le deuxième circuit d'échange de chaleur 56. Le GNL du premier circuit d'échange de chaleur 54 sera donc réchauffé par l'échangeur E4 avant d'atteindre l'échangeur E2, et le GNL du circuit 56 sera donc refroidi par le quatrième échangeur de chaleur E4 avant d'atteindre le troisième échangeur de chaleur E3.

La variante de la figure 7 combine les variantes des figures 4 et 6. Dans cette nouvelle variante, le deuxième échangeur de chaleur E2 comprend le cinquième circuit 36, le sixième circuit 46, le huitième circuit 50 et le premier circuit 16, et le troisième échangeur de chaleur E3 comprend le deuxième circuit 18, le septième circuit 38 et le neuvième circuit 52.

Les figures 8 et 9 ont été évoquées dans ce qui précède. Le premier échangeur de chaleur E1 et le deuxième échangeur de chaleur E2 sont combinés et ne forment plus qu'un unique composant dans la variante de la figure 8. Dans la variante de la figure 9, le premier échangeur de chaleur E1, le deuxième échangeur de chaleur E2 et le troisième échangeur de chaleur E3 ne forment plus qu'un unique composant.

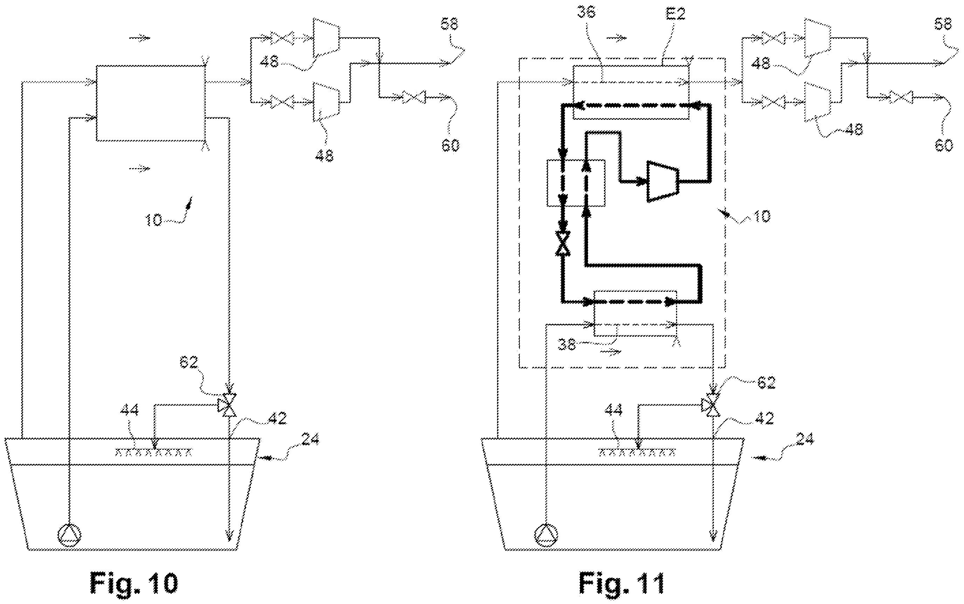

Les variantes de réalisation des figures 10 et 11 représentent l'intégration d'une pompe à chaleur 10 dans un navire et l'utilisation de cette pompe à chaleur 10 en relation avec des machines 58, 60 du navire telles que par exemple un moteur de propulsion 58, une génératrice électrique 60, et/ou une chaudière.

Le deuxième échangeur de chaleur E2 est du type de celui représenté à la figure 1. La sortie du cinquième circuit 36 précité est reliée ici à deux compresseurs 48 d'alimentation des machines 58, 60.

Les variantes des figures 10 et 11 permettent de voir également que la sortie du septième circuit 38 ou l'entrée 42 de la cuve 24 peut être équipée d'une vanne trois voies 62 dont un passage est relié à la sortie du septième circuit 38, un passage est relié à la rampe de pulvérisation 44 et l'autre passage est relié à un système d'injection en fond de cuve.

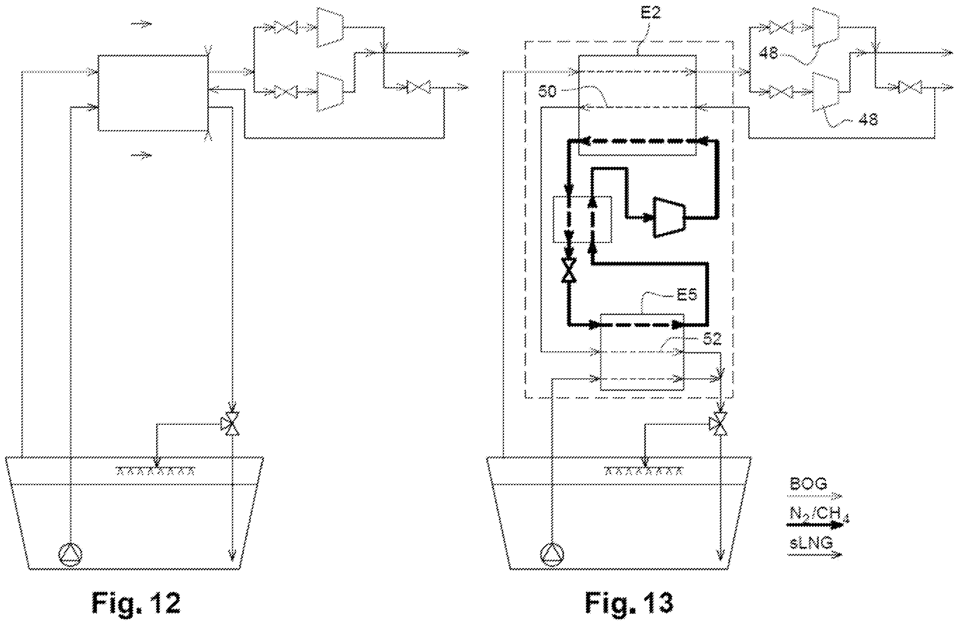

Les variantes des figures 12 et 13 sont similaires à celles des figures 10 et 11. Le deuxième échangeur de chaleur E2 est ici similaire à celui de la figure 5 dans la mesure où il comprend le huitième circuit 50 qui reçoit en entrée du gaz sortant du ou des compresseurs 48. Le troisième échangeur de chaleur E3 des figures 12 et 13 est similaire à celui de la figure 5 également.

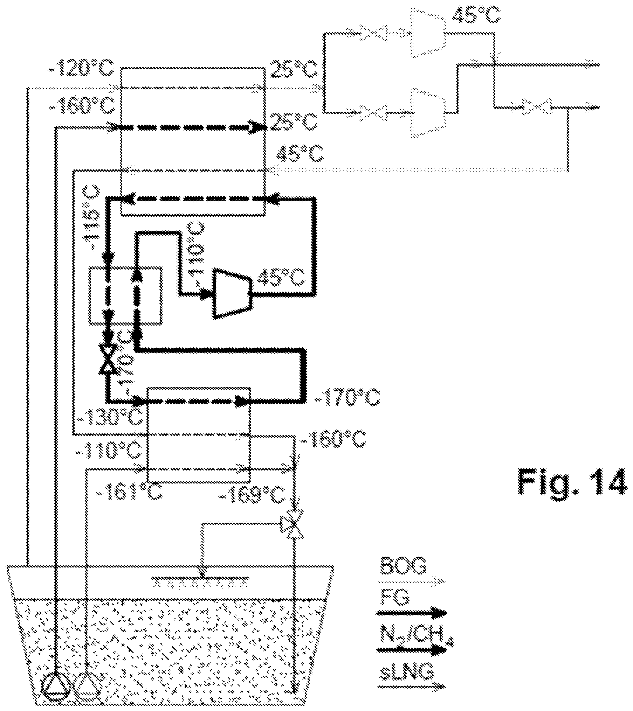

La figure 14 est similaire à la figure 9 et montre en outre des températures de fonctionnement dans un cas particulier de réalisation de l'invention.

Nous allons maintenant décrire cinq modes de fonctionnement du navire et de la pompe à chaleur associée.

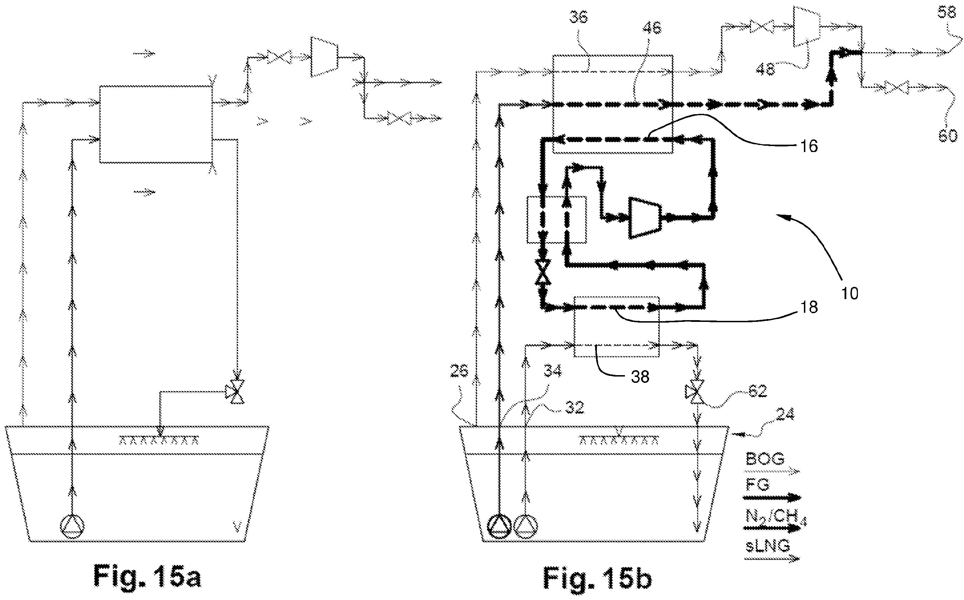

Le premier mode de fonctionnement est représenté aux figures 15a et 15b et correspond au cas où la vitesse de propulsion du navire est supérieure à une valeur seuil prédéterminée, qui est par exemple de 16 noeuds. Dans ce cas, les machines 58, 60 sont alimentées en BOG qui est du NBOG voire du FBOG et provient donc de la sortie 26 ou des sorties 26, 32 de la cuve 24. L'énergie cryogénique de la pompe à chaleur est ici utilisée pour sous-refroidir le GNL. Ce mode permet d'optimiser la consommation du navire en vue du fonctionnement de ses machines.

Du BOG est naturellement produit dans la cuve 24 et sort de la cuve pour alimenter le cinquième circuit 36 ainsi que les compresseurs 48 et les machines. La cuve 24 peut être équipée d'un capteur de pression pour mesurer la pression de BOG dans la cuve et détecter ainsi un dépassement d'un seuil prédéterminé. De manière générale, la pression dans la cuve 24 est comprise entre 80 et 150mbarg. Pendant le premier mode de fonctionnement, la pression dans la cuve est moyenne et peut être de l'ordre de 100mbarg.

Si la vitesse du navire est très importante et que les besoins en GNL gazeux sont supérieurs au BOG produit naturellement, il est possible de forcer la génération de BOG et former ainsi du FBOG. Du GNL est alors prélevé de la sortie 34 de la cuve et acheminé jusqu'au sixième circuit 46. Dans le cinquième circuit 36 et dans le sixième circuit 46, le BOG et le GNL sont chauffés par le premier circuit 16 de la pompe à chaleur et se retrouve entièrement à l'état gazeux et à une température proche de la température ambiante en entrée des compresseurs 48. Les compresseurs 48 augmentent la pression du gaz pour les besoins des machines. En parallèle, le deuxième circuit 18 de la pompe à chaleur 10 est utilisé pour refroidir du GNL prélevé par la sortie 32 et circulant dans le septième circuit 38, avant sa réinjection en fond de cuve via la vanne 62.

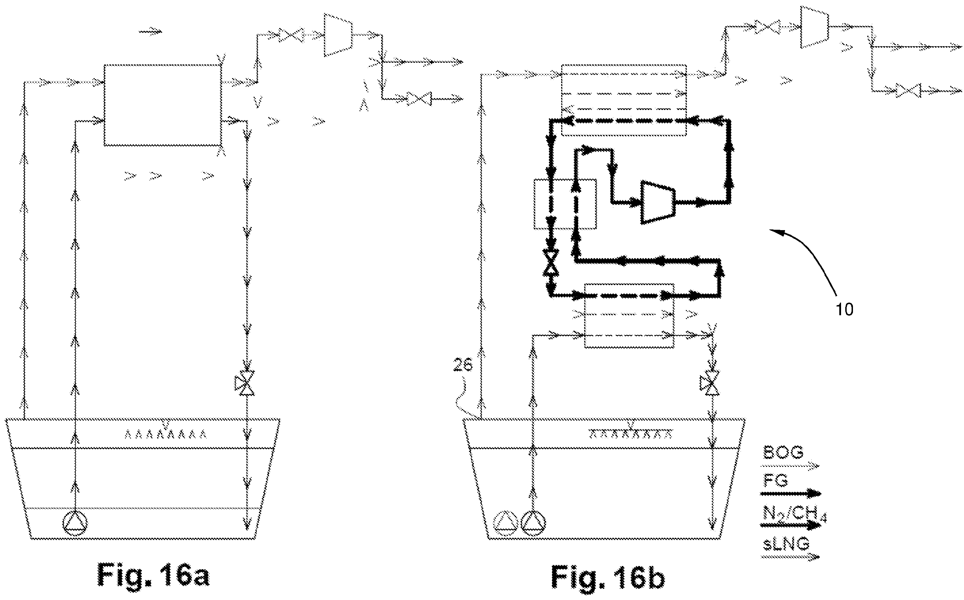

Le second mode de fonctionnement est représenté aux figures 16a et 16b et correspond au cas où la vitesse de propulsion du navire est de l'ordre de la valeur seuil précitée, qui est par exemple de 16 noeuds, cette vitesse étant appelé ici vitesse de croisière du navire. Les besoins en GNL gazeux du navire sont sensiblement égaux aux BOG produit naturellement. Dans ce cas, les machines sont alimentées en BOG qui est du NBOG et provient donc de la sortie 26 de la cuve. L'énergie cryogénique de la pompe à chaleur 10 est ici utilisée pour sous-refroidir le GNL. Pendant le second mode de fonctionnement, la pression dans la cuve est de l'ordre de 120mbarg.

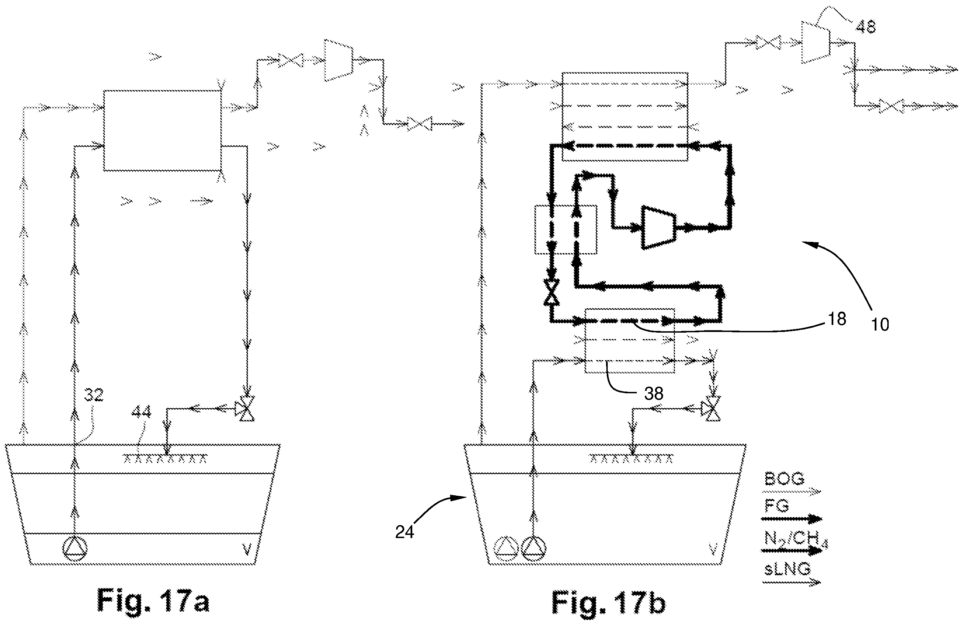

Le troisième mode de fonctionnement est représenté aux figures 17a et 17b et correspond au cas où la vitesse de propulsion du navire est légèrement inférieure à la valeur seuil, et par exemple comprise entre 14 et 16 noeuds. Dans ce cas, les machines sont alimentées en BOG qui est du NBOG seul. Le NBOG produit dans la cuve 24 est suffisant pour alimenter le navire. Ce NBOG est même supérieur aux besoins du navire. La génération de NBOG est ici limitée en pulvérisant du GNL dans le BOG de la cuve 24, de façon à recondenser du BOG en GNL. Pendant le troisième mode de fonctionnement, la pression dans la cuve est de l'ordre de 120mbarg.

Pour cette dernière partie, le deuxième circuit 18 de la pompe à chaleur 10 est utilisé pour refroidir du GNL prélevé par la sortie 32 et circulant dans le septième circuit 38, avant sa réinjection par la rampe de pulvérisation 44 dans la cuve 24.

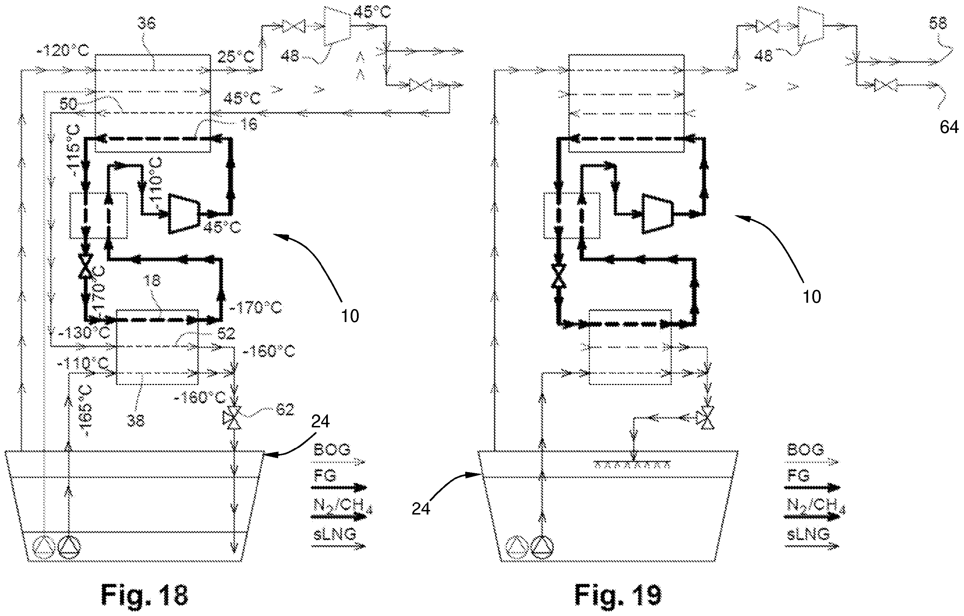

Le quatrième mode de fonctionnement est représenté à la figure 18 et correspond au cas où la vitesse de propulsion du navire est très inférieure à la valeur seuil, et par exemple inférieure à 14 noeuds. Dans ce cas, il y a trop de NBOG produit par rapport aux besoins des machines et une partie du gaz comprimé en sortie du ou des compresseurs 48 circule dans le huitième circuit 50 puis dans le neuvième circuit 52 en vue de son refroidissement. L'énergie cryogénique de la pompe à chaleur 10 est ici utilisée pour sous-refroidir ce gaz et le recondenser avant sa réinjection dans la cuve 24. On considère dans ce cas que du GNL sous refroidi à une température de -165°C environ est stocké dans la couche 40. La pompe 28 prélève du GNL froid en fond de cuve, le GNL circule dans le septième circuit 38 et s'échauffe légèrement pour sortir de ce septième circuit 38 à une température proche voire identique à celle du GNL sortant du neuvième circuit 52. Le GNL sortant de ces deux sorties sont mélangés et réinjectés au moyen de la vanne 62 en fond de cuve 24. Pendant le quatrième mode de fonctionnement, la pression dans la cuve est significative et par exemple de l'ordre de 140mbarg.

Le cinquième mode de fonctionnement est représenté à la figure 19 et est similaire au précédent mode de fonctionnement. Il y a trop de NBOG produit par rapport aux besoins des machines et une partie du gaz comprimé en sortie du ou des compresseurs 48 est brûlé dans une chaudière 64. La génération de NBOG est ici limitée en pulvérisant du GNL dans le BOG de la cuve, de façon à recondenser du BOG en GNL. L'énergie cryogénique de la pompe à chaleur est ici utilisée pour sous-refroidir ce gaz et le recondenser avant sa réinjection dans la cuve 24. Pendant le cinquième mode de fonctionnement, la pression dans la cuve est significative et par exemple de l'ordre de 140mbarg.

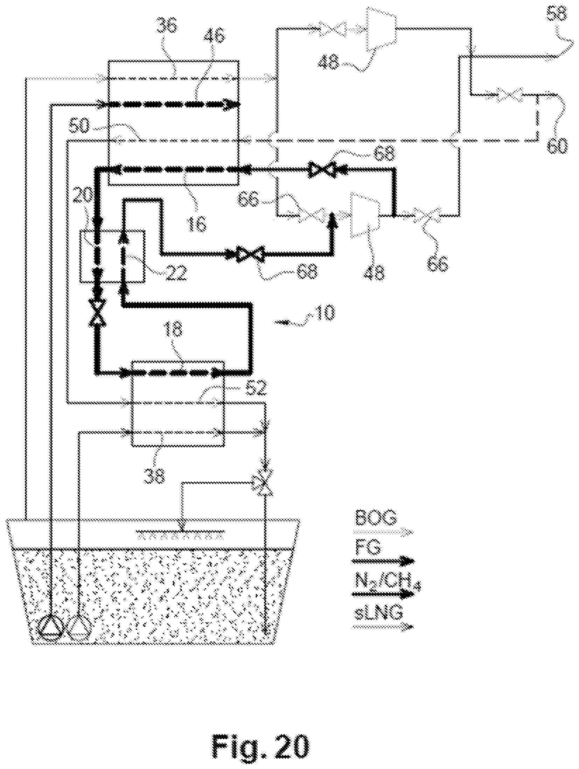

Enfin, la figure 20 illustre un sixième mode de réalisation de l'invention dans laquelle la pompe à chaleur 10 utilise le ou un des compresseur 48 utilisés pour l'alimentation des machines 58, 60 du navire, plutôt qu'un compresseur 12 dédié. Inversement, on peut considérer que les machines du navire sont alimentées en gaz par le compresseur de la pompe à chaleur 10. Dans ce cas, l'entrée du ou de l'un des compresseurs 48 est reliée d'une part à la sortie du cinquième circuit 36 et à la sortie du quatrième circuit 22, et la sortie du ou de l'un des compresseurs 48 est reliée d'une part à l'entrée du premier circuit 16 et aux machines du navire 58, 60.

En pratique, il y a une redondance des compresseurs 48 alimentant les machines du navire, pour des raisons de sécurité. Lorsqu'un des compresseurs 48 est défaillant, l'autre peut être utilisé pour alimenter en gaz les machines et garantir le fonctionnement et surtout la propulsion du navire. Du fait de la présence d'au moins deux compresseurs 48, il est donc possible, lorsque le premier compresseur 48 est fonctionnel et utilisé pour alimenter les machines, d'isoler le second compresseur 48 et de l'utiliser dans le cadre de la pompe à chaleur 10. Des premières vannes d'isolement 66 sont prévues en amont et en aval du second compresseur 48, pour relier respectivement son entrée et sa sortie au cinquième circuit 36 et aux machines du navire 58, 30. Des deuxièmes vannes d'isolement 68 sont prévues en amont et en aval du second compresseur 48, pour relier respectivement son entrée et sa sortie au quatrième circuit 22 et au premier circuit 16.

On comprend ainsi que, par défaut où le premier compresseur 48 sera fonctionnel, les premières vannes d'isolement 66 seront fermées et les deuxièmes vannes d'isolement 68 seront ouvertes de façon à ce que le second compresseur 48 soit utilisé dans la pompe à chaleur. Dans le cas où le premier compresseur 48 serait défaillant, les deuxièmes vannes d'isolement 68 seraient fermées et les premières vannes d'isolement 66 seraient ouvertes. Il serait alors possible d'alimenter les machines en gaz comprimé mais il ne serait alors plus possible d'utiliser la pompe à chaleur 10.

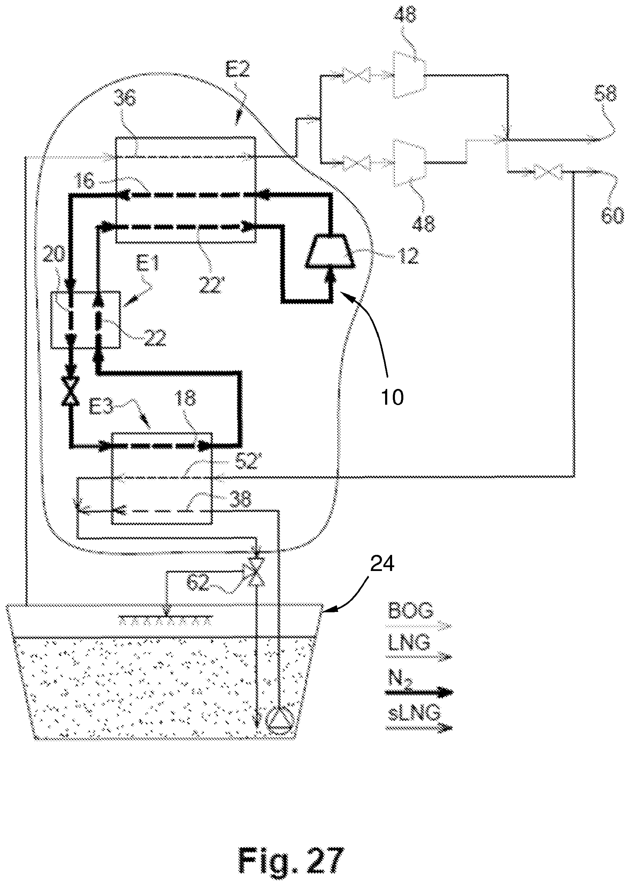

La variante de réalisation de la figure 27 diffère des modes de réalisation des figures 1 et suivantes essentiellement en ce que le quatrième circuit 22 du premier échangeur de chaleur E1 est reliée à l'entrée du compresseur 12 par un dixième circuit 22' du deuxième échangeur de chaleur E2. Le dixième circuit 22' permet de réchauffer le fluide cryogénique avant l'alimentation du compresseur 12 de la pompe à chaleur 10. Autrement dit, au lieu d'être réchauffé une seule fois dans le premier échangeur de chaleur E1, le fluide cryogénique est réchauffé une deuxième fois dans le deuxième échangeur de chaleur E2, avant d'alimenter le compresseur 12 constitutif de la pompe à chaleur 10.

Le dixième circuit 22' permet de refroidir le fluide cryogénique circulant dans le premier circuit 16, qui subit ainsi un double refroidissement dans le deuxième échangeur de chaleur E2. Le fluide cryogénique est refroidi, d'une part, par réception de froid avec du gaz d'évaporation prélevé dans la cuve 24 et circulant dans le cinquième circuit 36, et, d'autre part, par réception de froid du fluide cryogénique circulant dans le dixième circuit 22'.

Par ailleurs, comme c'est le cas aux figures 10 et suivantes, la sortie du cinquième circuit 36 du deuxième échangeur de chaleur E2 est reliée à l'entrée d'un ou plusieurs compresseurs 48 dont les sorties alimentent des machines du navire 58, 60 et peuvent être dérivées vers l'entrée d'un onzième circuit 52' du troisième échangeur de chaleur E3. La sortie de ce onzième circuit 52' est reliée à la vanne 62. Ce onzième circuit 52' permet de refroidir et liquéfier le gaz provenant de la cuve, avant sa réinjection dans la cuve 24.

Cette variante permet notamment d'utiliser la pompe à chaleur cryogénique 10 pour sous-refroidir du GNL et/ou recondenser du BOG. Elle est avantageuse car le deuxième échangeur de chaleur E2 ne comprend que trois circuits contre quatre ou plus dans certains modes de réalisation qui précèdent, ce qui rend cet échangeur plus simple et donc moins coûteux.

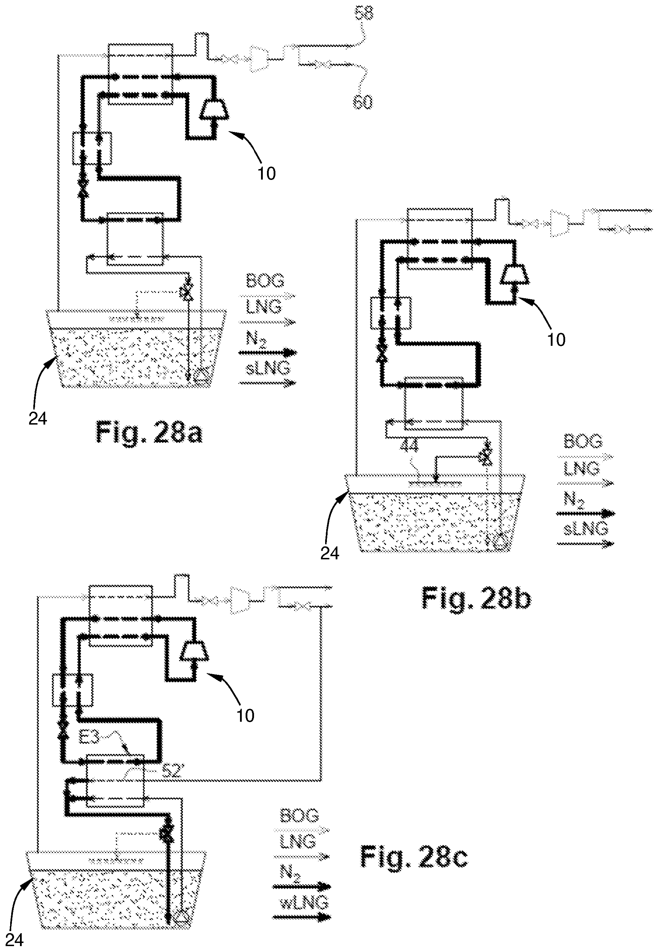

Les figures 28a à 28c montrent des phases de fonctionnement de cette variante de réalisation. Dans le cas de la figure 28a, les machines du navire 58, 60 demandent une quantité importante de gaz et le BOG prélevé est donc entièrement comprimé pour alimenter ces machines. La pompe à chaleur 10 est utilisée pour réchauffer le BOG et pour refroidir du GNL qui est prélevé puis réinjecté en fond de cuve 24. La phase de fonctionnement de la figure 28b est similaire à l'exception du fait que le GNL prélevé qui est refroidi est réinjecté dans la cuve par la rampe de pulvérisation 44. Dans le cas de la figure 28c, une partie du BOG comprimé circule dans le onzième circuit 52' pour être refroidi et recondensé par le troisième échangeur de chaleur E3 avant d'être injecté en fond de cuve, éventuellement mélangé au GNL prélevé et également sous-refroidi.

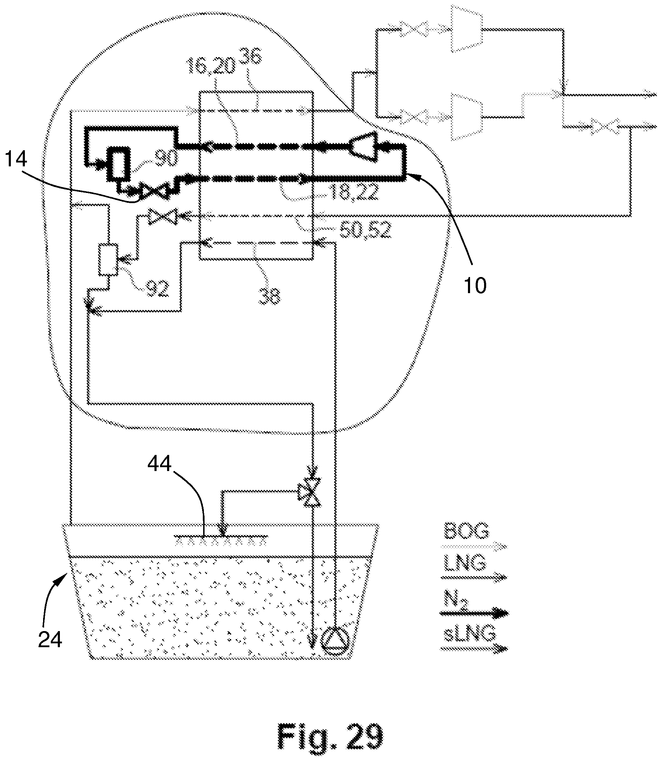

La variante de réalisation de la figure 29 diffère du mode de réalisation de la figure 9 notamment par le fait que l'échangeur de chaleur unique intègre en outre un huitième et/ou neuvième circuit 50, 52, ayant la même fonction que le huitième circuit 50 et que le neuvième circuit 52 décrits dans ce qui précède en relation avec la figure 13 par exemple, ou que le onzième circuit 52' de la variante de la figure 28, à savoir refroidir et recondenser le BOG prélevé dans la cuve et sortant du cinquième circuit 36 et du ou des compresseurs 48.

Dans cette variante, un premier ballon tampon 90 de séparation de phases est installé entre la sortie du premier/troisième circuit 16, 20 et l'entrée du deuxième/quatrième circuit 18, 22. Le premier ballon tampon 90 peut être alimenté avec un mélange diphasique et le deuxième/quatrième circuit 18, 22 est de préférence également alimenté avec un mélange diphasique qui résulte de la détente au moins partielle du fluide cryogénique liquide prélevé dans le fond du premier ballon tampon 90, après séparation de phases, et qui a subi une détente dans le détendeur 14 disposé entre la sortie du premier ballon tampon 90 et l'entrée du deuxième/quatrième circuit 18, 22.

Un second ballon tampon 92 de séparation de phases est installé à la sortie du huitième/neuvième circuit 50, 52, ce second ballon tampon 92 comportant une sortie de gaz reliée à l'entrée du cinquième circuit 36, avec la conduite de prélèvement de BOG de la cuve, et une sortie de liquide reliée aux moyens de réinjection de GNL dans la cuve 24, par le biais de la rampe de pulvérisation 44 ou de moyens d'injection en fond de cuve 24. Le second ballon tampon 92 peut être alimenté avec un mélange diphasique sortant du huitième/neuvième circuit 50, 52. Le second ballon tampon 92 est particulièrement utile dans le cas où le huitième/neuvième circuit 50, 52 ne permet pas de recondenser tout le gaz, et notamment les gaz légers comme l'azote contenu dans le BOG. Cet azote gazeux sortant du huitième/neuvième circuit 50, 52 est alors réinjecté dans le cinquième circuit 36 et recomprimé pour être au moins en partie recyclé par alimentation des machines du navire 58, 60.

Cette variante permet également d'utiliser la pompe à chaleur cryogénique 10 pour sous-refroidir du GNL et/ou recondenser du BOG. Elle est avantageuse notamment par la compacité de l'échangeur de chaleur unique utilisé.

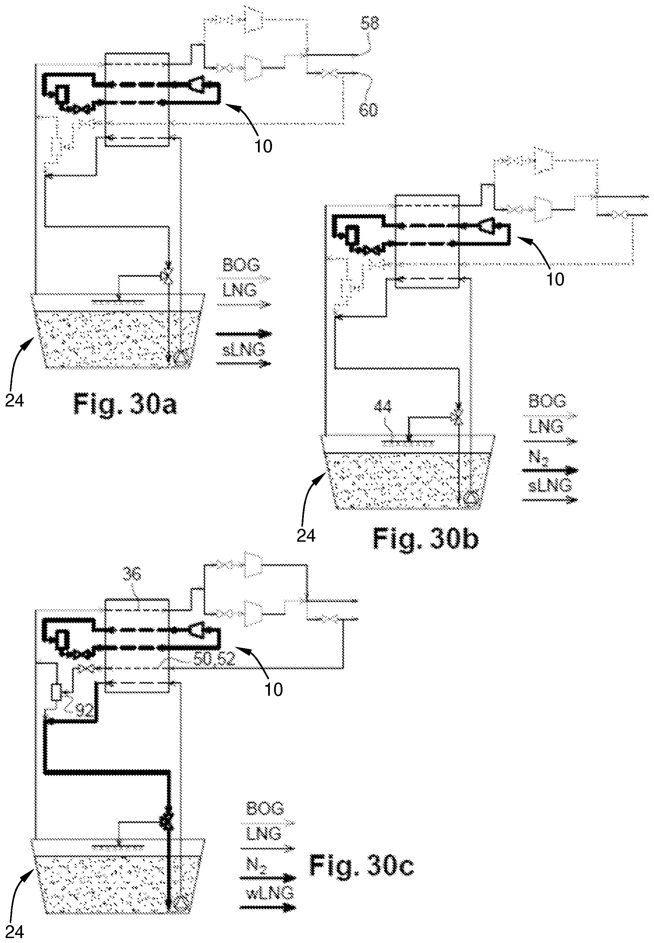

Les figures 30a à 30c montrent des phases de fonctionnement de cette variante de réalisation. Dans le cas de la figure 30a, les machines du navire 58, 60 demandent une quantité importante de gaz et le BOG prélevé est donc entièrement comprimé pour alimenter ces machines. La pompe à chaleur 10 est utilisée pour réchauffer le BOG et pour refroidir du GNL qui est prélevé puis réinjecté en fond de cuve 24. La phase de fonctionnement de la figure 30b est similaire à l'exception du fait que le GNL prélevé qui est refroidi est réinjecté dans la cuve par la rampe de pulvérisation 44. Dans le cas de la figure 30c, une partie du BOG comprimé circule dans le huitième/neuvième circuit 50, 52 pour être refroidi et recondensé avant d'alimenter le second ballon tampon 92. Le gaz contenu dans ce second ballon tampon 92 est redirigé vers le cinquième circuit 36 et le liquide qu'il contient est injecté en fond de cuve 24.

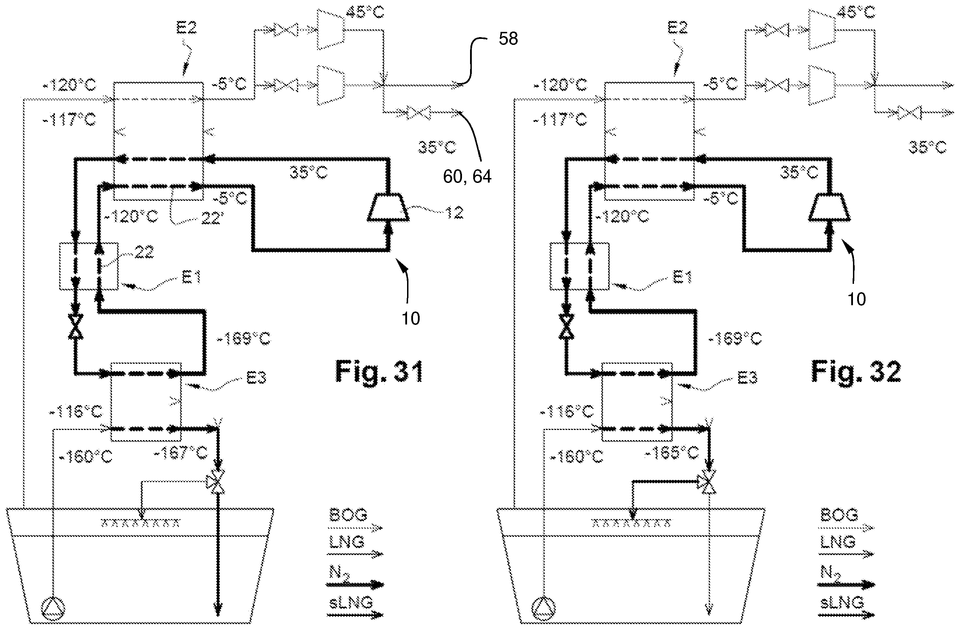

Les figures 31 à 33 donnent des exemples de valeurs de température des différents fluides dans le cadre des variantes de réalisation des figures 27 et suivantes.

Ces valeurs de température peuvent être comparées à celles de la figure 14. Comme évoqué dans ce qui précède, la différence repose notamment sur le fait que le deuxième échangeur de chaleur E2 comprend le dixième circuit 22' de liaison de la sortie du quatrième circuit 22 du premier échangeur de chaleur E1 à l'entrée du compresseur 12 de la pompe à chaleur 10. On constate que la température du fluide cryogénique à l'entrée du compresseur 12 (-5°C) est nettement supérieure à celle (-110°C) de la figure 14, du fait du double chauffage du fluide par le quatrième circuit 22 et par le dixième circuit 22', respectivement.

Dans le cas de la figure 31, le GNL est sous-refroidi à -167°C avant son injection dans la cuve 24. Peu ou pas de BOG est refroidi et recondensé via le deuxième échangeur de chaleur E2 car la production est juste suffisante pour répondre aux besoins des machines du navire 58, 60, 64.

Dans le cas de la figure 32, le GNL est sous refroidi à -165°C avant son injection dans la cuve 24. De la même façon, peu ou pas de BOG est refroidi et recondensé via le deuxième échangeur de chaleur E2 car la production est juste suffisante pour répondre aux besoins des machines du navire 58, 60, 64.

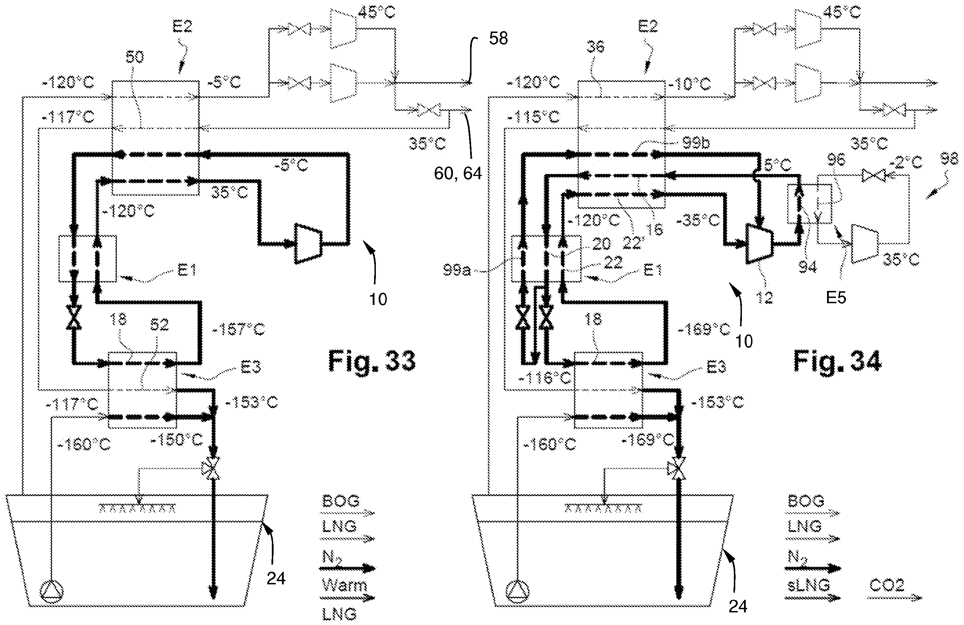

Dans le cas de la figure 33, la production de BOG dépasse la demande en gaz des machines du navire 58, 60, 64. Le BOG excédent est donc refroidi et recondensé par passage dans le huitième circuit 50 et dans le neuvième circuit 52 respectivement du deuxième échangeur de chaleur E2 et du troisième échangeur de chaleur E3, puis est réinjecté dans la cuve 24. Dans ce cas, le GNL prélevé est réchauffé dans le troisième échangeur de chaleur E3 et va donc refroidir (et non pas être refroidi par) le deuxième circuit 18 de la pompe à chaleur 10 et le gaz comprimé qui provient du huitième circuit 50.

Dans la variante de réalisation de la figure 34, le dispositif comprend un cinquième échangeur de chaleur E5 à deux circuits 94, 96 dont un circuit 96 qui fait partie d'un refroidisseur 98. Le refroidisseur 98 comprend en série un compresseur dont la sortie est reliée par une vanne de détente à une extrémité du circuit 96 dont l'autre extrémité est reliée à l'entrée du compresseur. L'autre circuit 94 du cinquième échangeur de chaleur E5 est relié d'une part à la sortie du compresseur 12 de la pompe à chaleur 10 et d'autre part au premier circuit 16 du deuxième échangeur de chaleur E2. La sortie du premier circuit 16 est reliée au troisième circuit 20 du premier échangeur de chaleur E1 dont la sortie, en plus d'être reliée au deuxième circuit 18, est reliée par une vanne de détente additionnelle à l'entrée d'un circuit additionnel 99a du deuxième échangeur de chaleur E2. La sortie de ce circuit additionnel 99a est reliée à l'entrée d'un douzième circuit 99b du premier échangeur de chaleur E1 dont la sortie est reliée, avec la sortie du dixième circuit 22', à l'entrée du compresseur 12 de la pompe à chaleur cryogénique 10.

De manière générale, dans toutes les variantes décrites dans ce qui précède et illustrées dans les dessins, tout ou partie des échangeurs peuvent être simplifiés pour en réduire le nombre de circuits et donc leur coût, ou au contraire peuvent être rassemblés et leurs circuits communalisés pour réduire le nombre d'échangeurs.

## Revendications

1. Dispositif de traitement de gaz liquéfié comportant un système de pompe (28, 30) destiné à être immergé dans la cuve de stockage dudit gaz liquéfié, un cinquième circuit (36) de réchauffement de gaz d'évaporation naturelle destiné à être relié à une sortie de gaz d'évaporation naturelle de ladite cuve et/ou un sixième circuit (46) de réchauffement de gaz liquéfié relié audit système de pompe (28, 30) et un septième circuit (38) de gaz liquéfié reliée audit système de pompe (28, 30), et au moins une pompe à chaleur cryogénique (10) comportant en circuit fermé au moins un compresseur (12, 48), au moins un détendeur (14), un premier circuit (16) de réception de froid s'étendant entre ledit au moins un compresseur (12, 48) et ledit au moins un détendeur (14), et un deuxième circuit (18) de transmission de froid s'étendant entre ledit au moins un détendeur (14) et ledit au moins un compresseur (12, 48), ledit circuit fermé comportant un fluide cryogénique configuré pour être dans un état diphasique dans au moins une partie de ce circuit, ledit deuxième circuit (18) de transmission de froid étant configuré pour avoir en sortie une température inférieure ou égale à -40°C, et dans lequel le premier circuit (16) de réception de froid est configuré pour chauffer le cinquième circuit (36) de réchauffement de gaz d'évaporation naturelle et/ou le sixième circuit (46) de réchauffement de gaz liquéfié, et dont le deuxième circuit (18) de transmission de froid est configuré pour refroidir ou réchauffer le septième circuit (38) de gaz liquéfié.

2. Dispositif selon la revendication 1, comprenant en outre un troisième circuit (20) et un quatrième circuit (22), dans lequel la sortie dudit premier circuit (16) et le détendeur (14), d'une part, et la sortie dudit deuxième circuit (18) et le compresseur (12, 48), d'autre part, sont reliés par au moins les troisième et quatrième circuits (20, 22) d'échanges mutuels de chaleur.

3. Dispositif selon la revendication 2, comprenant en outre un dixième circuit (22'), dans lequel la sortie dudit quatrième circuit (22) est reliée par le dixième circuit (22') audit compresseur (12, 48), ce dixième circuit (22') étant configuré pour transmettre du froid audit premier circuit (16).

4. Dispositif selon la revendication 2 ou 3, dans lequel le premier circuit (16), le deuxième circuit (18), le troisième circuit (20), le quatrième circuit (22) et le dixième circuit (22') sont configurés pour faire partie d'un même échangeur de chaleur, ou de deux ou trois échangeurs de chaleur distincts.

5. Dispositif selon l'une des revendications précédentes, dans lequel ledit fluide cryogénique est choisi parmi l'azote, le méthane, l'oxygène, l'éthane, l'éthylène, le butane, l'isobutane, le propane, l'isopropane, l'argon ou un mélange de ces gaz.

6. Dispositif selon l'une des revendications précédentes, dans lequel ledit compresseur (48) est apte à comprimer du gaz destiné à alimenter en gaz au moins une machine (58, 60) dudit navire, ledit compresseur (48) étant en outre relié par des vannes d'isolement (66, 68) au premier circuit (16) et au deuxième circuit (18) et à ladite au moins une machine (58, 60) dudit navire, de façon à pouvoir l'isoler de la machine (58, 60) dudit navire, lorsqu'il fonctionne pour la pompe à chaleur (10), et à l'isoler de la pompe à chaleur (10), lorsqu'il fonctionne pour ladite au moins une machine (58, 60) dudit navire.

7. Dispositif selon l'une des revendications précédentes, dans lequel une sortie dudit septième circuit (38) est destinée à être reliée à une entrée (42) de gaz liquéfié de ladite cuve (24), et de préférence à au moins une rampe (44) de pulvérisation de gaz liquéfié en partie haute de la cuve (24) et/ou à au moins un moyen d'injection dudit gaz liquéfié en fond de cette cuve (24).

8. Dispositif selon l'une des revendications précédentes, dans lequel une sortie dudit cinquième circuit (36) et/ou une sortie dudit sixième circuit (46) sont reliées à au moins un compresseur (48) destiné à alimenter en gaz au moins une machine (58, 60, 64) d'un navire de transport de gaz liquéfié, telle que par exemple un moteur de propulsion (58) dudit navire, une génératrice électrique (60), et/ou une chaudière (64).

9. Dispositif selon la revendication 8, comprenant en outre un huitième circuit (50), dans lequel une sortie dudit compresseur (48), configuré pour alimenter en gaz au moins une machine (58, 60, 64) du navire, est reliée au huitième circuit (50) d'échange de chaleur avec ledit premier circuit (16) et/ou ledit cinquième circuit (36) et/ou ledit sixième circuit (46).

10. Dispositif selon la revendication précédente, comprenant en outre un neuvième circuit (20), dans lequel une sortie dudit huitième circuit (50) est reliée à une entrée du neuvième circuit (52) d'échange de chaleur avec ledit deuxième circuit (18) et/ou ledit septième circuit (38).

11. Dispositif selon l'une des revendications 8 à 10, comprenant en outre des vannes (66), dans lequel ledit au moins un compresseur (48) est relié par les vannes (66) respectivement à la sortie du cinquième circuit (36) et/ou du sixième circuit (46), et à ladite au moins une machine, ainsi que par les vannes (68) respectivement aux premier et second circuits (16, 18).

12. Dispositif selon l'une des revendications 8 à 11, dans lequel ledit au moins un compresseur (48) est relié directement à l'entrée d'un onzième circuit (52') configuré pour échanger de la chaleur avec ledit deuxième circuit (18) et/ou ledit septième circuit (38).

13. Dispositif selon l'une des revendications précédentes, comprenant en outre un onzième circuit (52'), dans laquelle le premier circuit (16), le deuxième circuit (18), le troisième circuit (20), le quatrième circuit (22), le cinquième circuit (36), le sixième circuit (46), le septième circuit (38), le huitième circuit (50), le neuvième circuit (52) et le onzième circuit (52') sont configurés pour faire partie d'un même échangeur de chaleur, ou de plusieurs échangeurs de chaleur distincts.

14. Dispositif selon la revendication 13, la pompe à chaleur (10) étant telle que définie à la revendication 2 au moins, dans laquelle il comprend un premier échangeur de chaleur (E1) comportant au moins, voire uniquement, lesdits troisième et quatrième circuits (20, 22).

15. Dispositif selon la revendication 13 ou 14, la pompe à chaleur (10) étant telle que définie à la revendication 3 au moins, dans laquelle il comprend un deuxième échangeur de chaleur (E2) comportant au moins, voire uniquement, lesdits premier, cinquième et dixième circuits (16, 36 et 22').

16. Dispositif selon l'une des revendications 13 à 15, dans laquelle il comprend un troisième échangeur de chaleur (E3) comportant au moins, voire uniquement, lesdits second et septième circuits (18, 38).

17. Dispositif selon l'une des revendications précédentes, dans laquelle la pompe à chaleur (10) est configurée de façon à ce que, en sortie dudit détendeur (14), le fluide cryogénique ait une température inférieure d'au moins 3°C à la température du gaz liquéfié entrant dans ledit septième circuit (38).

18. Navire de transport de gaz liquéfié, comportant au moins une cuve (24) de stockage de ce gaz et un dispositif selon l'une des revendications précédentes.

19. Procédé de refroidissement et/ou de réchauffement de gaz liquéfié stocké dans un navire selon la revendication 18, comprenant les étapes consistant à :
a) prélever du gaz liquéfié de la cuve (24) et le faire circuler dans ledit septième circuit (38) afin de modifier sa température, puis
b) réinjecter ce gaz liquéfié dans la cuve, en partie haute et/ou en fond de cuve (24).

20. Procédé selon la revendication 19, comprenant les étapes consistant à :
c) prélever du gaz d'évaporation naturelle de la cuve (24) et le faire circuler dans ledit cinquième circuit (36) afin d'augmenter sa température, et/ou
d) prélever du gaz liquéfié de la cuve (24) et le faire circuler dans ledit sixième circuit (46) afin de la vaporiser et d'augmenter sa température.

21. Procédé selon la revendication 20, le dispositif étant tel que défini à la revendication 8 ou 9, comprenant les étapes consistant à :
e) alimenter ledit au moins un compresseur (48) configuré pour alimenter en gaz au moins une machine (58, 60, 64) dudit navire, avec du gaz sortant dudit cinquième circuit (36) et/ou dudit sixième circuit (46), et
f) prélever éventuellement une partie du gaz en sortie dudit au moins un compresseur et faire circuler ce gaz dans ledit huitième circuit (50), voire dans ledit neuvième circuit (52), afin de le refroidir.

22. Procédé selon l'ensemble des revendications 19 et 20, dans lequel les étapes a), b) et c) sont réalisées simultanément lorsque ledit navire est à un régime de croisière, correspondant par exemple à une vitesse de croisière, du gaz liquéfié étant réinjecté en fond de cuve à l'étape b).

23. Procédé selon l'ensemble des revendications 19 à 21, dans lequel les étapes a), b), c), e), f) et g) sont réalisées simultanément lorsque ledit navire est à un faible régime, correspondant par exemple à une vitesse très inférieure à un seuil prédéterminé, du gaz liquéfié circulant dans ledit septième circuit (38) en vue de son réchauffement et son mélange avec du gaz sortant dudit neuvième circuit (52), avant sa réinjection dans la cuve à l'étape b), de préférence en fond de cuve.

24. Procédé selon l'une des revendications 19 à 23, comprenant en outre :
- une étape d'utilisation d'au moins un compresseur (48) pour comprimer du gaz en vue de l'alimentation en gaz d'au moins une machine (58, 60, 64) du navire, et
- une étape d'utilisation du même au moins un compresseur (48) pour comprimer du fluide cryogénique dans la pompe à chaleur (10).

## Patentansprüche

1. Vorrichtung zur Behandlung von Flüssiggas, bestehend aus einem Pumpensystem (28, 30), das dazu bestimmt ist, in den Speichertank des Flüssiggases eingetaucht zu werden, und einem fünften Kreislauf (36) zum Erhitzen von natürlichem Verdampfungsgas, der dazu bestimmt ist, an einen Auslass für natürliches Verdampfungsgas angeschlossen zu werden den Tank und/oder einen sechsten Flüssiggas-Heizkreis (46), der mit dem Pumpensystem (28, 30) verbunden ist, und einen siebten Flüssiggas-Heizkreis (38), der mit dem Pumpensystem (28, 30) verbunden ist, und mindestens eine Tieftemperaturheizung Pumpe (10), die in einem geschlossenen Kreislauf mindestens einen Kompressor (12, 48), mindestens einen Expander (14) und einen ersten Kreislauf (16) zur Aufnahme von Kälte umfasst, der sich zwischen dem mindestens einen Kompressor (12, 48) und dem mindestens einen Kompressor (12, 48) erstreckt mindestens einen Expander (14) und einen zweiten Kälteübertragungskreislauf (18), der sich zwischen dem mindestens einen Expander (14) und dem mindestens einen Kompressor (12, 48) erstreckt, wobei der geschlossene Kreislauf ein kryogenes Fluid umfasst, das so konfiguriert ist, dass es in einem Zweiphasenzustand in mindestens einem Teil dieses Kreislaufs, wobei der zweite Kälteübertragungskreis (18) so konfiguriert ist, dass er eine Ausgangstemperatur von weniger als oder gleich -40 °C aufweist, und wobei der erste Kälteempfangskreis (16) so konfiguriert ist konfiguriert, um den fünften Heizkreislauf (36) für natürliches Verdampfungsgas und/oder den sechsten Heizkreislauf (46) für verflüssigtes Gas zu erwärmen, und dessen zweiter Kälteübertragungskreislauf (18) dafür konfiguriert ist, den siebten Kreislauf (38) für verflüssigtes Gas zu kühlen oder zu erwärmen.

2. Vorrichtung nach Anspruch 1, weiterhin umfassend einen dritten Schaltkreis (20) und einen vierten Schaltkreis (22), in denen der Ausgang des ersten Schaltkreises (16) und des Expanders (14) einerseits und der Ausgang des genannten der zweite Kreislauf (18) und der Kompressor (12, 48) sind hingegen durch zumindest den dritten und vierten Kreislauf (20, 22) zum gegenseitigen Wärmeaustausch verbunden.

3. Vorrichtung nach Anspruch 2, weiterhin umfassend einen zehnten Kreislauf (22'), in dem der Ausgang des vierten Kreislaufs (22) über den zehnten Kreislauf (22') mit dem Kompressor (12, 48) verbunden ist, wobei dieser zehnte Kreislauf ( 22'), der so konfiguriert ist, dass er Kälte an den ersten Kreislauf (16) überträgt.

4. Vorrichtung nach Anspruch 2 oder 3, wobei der erste Stromkreis (16), der zweite Stromkreis (18), der dritte Stromkreis (20), der vierte Stromkreis (22) und der zehnte Stromkreis (22') so konfiguriert sind, dass sie Teil a bilden einzelner Wärmetauscher oder zwei oder drei separate Wärmetauscher.

5. Vorrichtung nach einem der vorhergehenden Ansprüche, bei der das kryogene Fluid ausgewählt ist aus Stickstoff, Methan, Sauerstoff, Ethan, Ethylen, Butan, Isobutan, Propan, Isopropan, Argon oder eine Mischung dieser Gase.

6. Vorrichtung nach einem der vorhergehenden Ansprüche, bei der der Kompressor (48) in der Lage ist, Gas zu komprimieren, das dazu bestimmt ist, mindestens eine Maschine (58, 60) des Behälters mit Gas zu versorgen, wobei der Kompressor (48) außerdem angeschlossen ist durch Absperrventile (66, 68) zum ersten Kreislauf (16) und zum zweiten Kreislauf (18) und zu der mindestens einen Maschine (58, 60) des Schiffs, um es von der Maschine isolieren zu können (58, 60) des Gefäßes, wenn es für die Wärmepumpe (10) betrieben wird, und um es von der Wärmepumpe (10) zu isolieren, wenn es für die mindestens eine Maschine (58, 60) des Gefäßes betrieben wird.

7. Vorrichtung nach einem der vorhergehenden Ansprüche, bei der ein Auslass des siebten Kreislaufs (38) dazu bestimmt ist, mit einem Flüssiggaseinlass (42) des Tanks (24) und vorzugsweise mit mindestens einer Rampe (44) verbunden zu werden. Sprühen von Flüssiggas in den oberen Teil des Tanks (24) und/oder mindestens ein Mittel zum Einspritzen des Flüssiggases in den Boden dieses Tanks (24).

8. Vorrichtung nach einem der vorhergehenden Ansprüche, bei der ein Ausgang des fünften Kreislaufs (36) und/oder ein Ausgang des sechsten Kreislaufs (46) mit mindestens einem Kompressor (48) verbunden sind, der dazu bestimmt ist, mindestens einen Kompressor mit Gas zu versorgen Maschine (58, 60, 64) eines Flüssiggastransportschiffs, wie beispielsweise ein Antriebsmotor (58) des Schiffs, ein elektrischer Generator (60) und/oder ein Kessel (64).

9. Vorrichtung nach Anspruch 8, die außerdem einen achten Kreislauf (50) umfasst, an den ein Ausgang des Kompressors (48) angeschlossen ist, der dazu konfiguriert ist, mindestens eine Maschine (58, 60, 64) des Schiffs mit Gas zu versorgen einen achten Kreislauf (50) zum Austausch von Wärme mit dem ersten Kreislauf (16) und/oder dem fünften Kreislauf (36) und/oder dem sechsten Kreislauf (46).

10. Vorrichtung nach dem vorhergehenden Anspruch, weiterhin umfassend einen neunten Kreislauf (20), in dem ein Ausgang des achten Kreislaufs (50) mit einem Eingang des neunten Kreislaufs (52) zum Wärmeaustausch mit dem zweiten Kreislauf (18) verbunden ist /oder der siebte Schaltkreis (38).

11. Vorrichtung nach einem der Ansprüche 8 bis 10, weiterhin umfassend Ventile (66), bei denen der mindestens eine Kompressor (48) über die Ventile (66) jeweils mit dem Ausgang des fünften Kreislaufs (36) verbunden ist und/oder zum sechsten Kreislauf (46) und zu der mindestens einen Maschine sowie über die Ventile (68) zum ersten und zweiten Kreislauf (16, 18).

12. Vorrichtung nach einem der Ansprüche 8 bis 11, bei der der mindestens eine Kompressor (48) direkt mit dem Eingang eines elften Kreislaufs (52') verbunden ist, der zum Wärmeaustausch mit dem zweiten Kreislauf (18) und/oder konfiguriert ist besagter siebter Kreislauf (38).

13. Vorrichtung nach einem der vorhergehenden Ansprüche, weiterhin umfassend einen elften Schaltkreis (52'), in dem der erste Schaltkreis (16), der zweite Schaltkreis (18), der dritte Schaltkreis (20), der vierte Schaltkreis (22), der Der fünfte Kreislauf (36), der sechste Kreislauf (46), der siebte Kreislauf (38), der achte Kreislauf (50), der neunte Kreislauf (52) und der elfte Kreislauf (52') sind so konfiguriert, dass sie Teil derselben Wärme bilden Wärmetauscher oder mehrere separate Wärmetauscher.

14. Vorrichtung nach Anspruch 13, wobei die Wärmepumpe (10) mindestens der Definition in Anspruch 2 entspricht und einen ersten Wärmetauscher (E1) umfasst, der mindestens oder sogar nur den dritten und vierten Kreislauf (20, 22) umfasst).

15. Vorrichtung nach Anspruch 13 oder 14, wobei die Wärmepumpe (10) mindestens der Definition in Anspruch 3 entspricht und einen zweiten Wärmetauscher (E2) umfasst, der mindestens oder sogar nur den ersten, fünften und zehnten Kreislauf umfasst (16, 36 und 22').

16. Vorrichtung nach einem der Ansprüche 13 bis 15, bei der sie einen dritten Wärmetauscher (E3) umfasst, der mindestens oder sogar nur den zweiten und siebten Kreislauf (18, 38) umfasst.

17. Gerät nach einem der vorhergehenden Ansprüche, bei dem die Wärmepumpe (10) so konfiguriert ist, dass das kryogene Fluid am Auslass des Expanders (14) eine Temperatur aufweist, die um mindestens 3°C niedriger ist als die Temperatur verflüssigtes Gas gelangt in den siebten Kreislauf (38).

18. Behälter zum Transport von Flüssiggas, umfassend mindestens einen Tank (24) zur Speicherung dieses Gases und eine Vorrichtung nach einem der vorhergehenden Ansprüche.

19. Verfahren zum Kühlen und/oder Erhitzen von in einem Schiff gespeichertem Flüssiggas nach Anspruch 18, umfassend die Schritte:
a) Entnahme von Flüssiggas aus dem Tank (24) und Zirkulieren im siebten Kreislauf (38), um dann seine Temperatur zu ändern
b) Wiedereinspritzen dieses verflüssigten Gases in den Tank, im oberen Teil und/oder im Boden des Tanks (24).

20. Verfahren nach Anspruch 19, umfassend die Schritte:
c) Entnahme von natürlichem Verdampfungsgas aus dem Tank (24) und dessen Zirkulieren im fünften Kreislauf (36), um seine Temperatur zu erhöhen, und/oder
d) Entnahme von Flüssiggas aus dem Tank (24) und dessen Zirkulieren im sechsten Kreislauf (46), um es zu verdampfen und seine Temperatur zu erhöhen.

21. Verfahren nach Anspruch 20, wobei die Vorrichtung wie in Anspruch 8 oder 9 definiert ist und die folgenden Schritte umfasst:
e) Versorgen des mindestens einen Kompressors (48), der so konfiguriert ist, dass er mindestens eine Maschine (58, 60, 64) des Schiffs mit Gas versorgt, wobei das Gas den fünften Kreislauf (36) und/oder den sechsten Kreislauf (46) verlässt, Und
f) wahlweise Entnahme eines Teils des Gases am Ausgang des mindestens einen Kompressors und Zirkulieren dieses Gases im achten Kreislauf (50) oder sogar im neunten Kreislauf (52), um es abzukühlen.

22. Verfahren nach den beiden Ansprüchen 19 und 20, bei dem die Schritte a), b) und c) gleichzeitig durchgeführt werden, wenn das Schiff eine Reisegeschwindigkeit hat, die beispielsweise einer Reisegeschwindigkeit entspricht, wobei am Boden des Schiffes wieder Flüssiggas injiziert wird den Tank in Schritt b).

23. Verfahren nach allen Ansprüchen 19 bis 21, bei dem die Schritte a), b), c), e), f) und g) gleichzeitig durchgeführt werden, wenn sich das Schiff auf einer niedrigen Geschwindigkeit befindet, die beispielsweise einer hohen Geschwindigkeit entspricht niedriger als ein vorbestimmter Schwellenwert ist, dass verflüssigtes Gas im siebten Kreislauf (38) zirkuliert, um es zu erhitzen und mit dem Gas zu vermischen, das den neunten Kreislauf (52) verlässt, bevor es in Schritt b) erneut in den Tank eingespritzt wird, vorzugsweise am Boden des Tanks.

24. Verfahren nach einem der Ansprüche 19 bis 23, weiterhin umfassend:
- einen Schritt, bei dem mindestens ein Kompressor (48) zum Komprimieren von Gas verwendet wird, um mindestens eine Maschine (58, 60, 64) des Schiffs mit Gas zu versorgen, und
- einen Schritt der Verwendung desselben mindestens einen Kompressors (48), um kryogenes Fluid in der Wärmepumpe (10) zu komprimieren.

## Claims

1. Device for treating liquefied gas comprising a pump system (28, 30) intended to be immersed in the storage tank of said liquefied gas, a fifth circuit (36) for heating natural evaporation gas intended to be connected to an outlet of natural evaporation gas from said tank and/or a sixth liquefied gas heating circuit (46) connected to said pump system (28, 30) and a seventh liquefied gas circuit (38) connected to said pump system (28, 30), and at least one cryogenic heat pump (10) comprising in closed circuit at least one compressor (12, 48), at least one expander (14), a first circuit (16) for receiving cold extending between said at least one compressor (12, 48) and said at least one expander (14), and a second cold transmission circuit (18) extending between said at least one expander (14) and said at least one compressor (12, 48), said closed circuit comprising a cryogenic fluid configured to be in a two-phase state in at least a part of this circuit, said second cold transmission circuit (18) being configured to have an output temperature lower than or equal to -40°C, and wherein the first cold receiving circuit (16) is configured to heat the fifth natural evaporation gas heating circuit (36) and/or the sixth gas heating circuit (46) liquefied, and whose second cold transmission circuit (18) is configured to cool or heat the seventh circuit (38) of liquefied gas.

2. Device according to claim 1, further comprising a third circuit (20) and a fourth circuit (22), in which the output of said first circuit (16) and the expander (14), on the one hand, and the output of said second circuit (18) and the compressor (12, 48), on the other hand, are connected by at least the third and fourth circuits (20, 22) for mutual heat exchange.

3. Device according to claim 2, further comprising a tenth circuit (22'), in which the output of said fourth circuit (22) is connected by the tenth circuit (22') to said compressor (12, 48), this tenth circuit (22 ') being configured to transmit cold to said first circuit (16).

4. Device according to claim 2 or 3, wherein the first circuit (16), the second circuit (18), the third circuit (20), the fourth circuit (22) and the tenth circuit (22') are configured to form part a single heat exchanger, or two or three separate heat exchangers.

5. Device according to one of the preceding claims, in which the said cryogenic fluid is chosen from nitrogen, methane, oxygen, ethane, ethylene, butane, isobutane, propane, isopropane, argon or a mixture of these gases.

6. Device according to one of the preceding claims, in which the said compressor (48) is capable of compressing gas intended to supply gas to at least one machine (58, 60) of the said vessel, the said compressor (48) being further connected by isolation valves (66, 68) to the first circuit (16) and to the second circuit (18) and to said at least one machine (58, 60) of said ship, so as to be able to isolate it from the machine (58, 60) of said vessel, when operating for the heat pump (10), and to isolate it from the heat pump (10), when operating for said at least one machine (58, 60) of said vessel.

7. Device according to one of the preceding claims, in which an outlet of said seventh circuit (38) is intended to be connected to a liquefied gas inlet (42) of said tank (24), and preferably to at least one ramp (44 ) spraying liquefied gas in the upper part of the tank (24) and/or at least one means for injecting said liquefied gas into the bottom of this tank (24).

8. Device according to one of the preceding claims, in which an output of said fifth circuit (36) and/or an output of said sixth circuit (46) are connected to at least one compressor (48) intended to supply gas to at least one machine ( 58, 60, 64) of a liquefied gas transport ship, such as for example a propulsion engine (58) of said ship, an electric generator (60), and/or a boiler (64).

9. Device according to claim 8, further comprising an eighth circuit (50), in which an output of said compressor (48), configured to supply gas to at least one machine (58, 60, 64) of the ship, is connected to the eighth circuit (50) for exchanging heat with said first circuit (16) and/or said fifth circuit (36) and/or said sixth circuit (46).

10. Device according to the preceding claim, further comprising a ninth circuit (20), in which an output of said eighth circuit (50) is connected to an input of the ninth circuit (52) for heat exchange with said second circuit (18) and /or said seventh circuit (38).

11. Device according to one of Claims 8 to 10, further comprising valves (66), in which the said at least one compressor (48) is connected by the valves (66) respectively to the output of the fifth circuit (36) and/ or the sixth circuit (46), and to said at least one machine, as well as by the valves (68) respectively to the first and second circuits (16, 18).

12. Device according to one of Claims 8 to 11, in which the said at least one compressor (48) is connected directly to the input of an eleventh circuit (52') configured to exchange heat with the said second circuit (18) and/or said seventh circuit (38).

13. Device according to one of the preceding claims, further comprising an eleventh circuit (52'), in which the first circuit (16), the second circuit (18), the third circuit (20), the fourth circuit (22), the fifth circuit (36), the sixth circuit (46), the seventh circuit (38), the eighth circuit (50), the ninth circuit (52) and the eleventh circuit (52') are configured to form part of a same heat exchanger, or several separate heat exchangers.

14. Device according to Claim 13, the heat pump (10) being as defined in Claim 2 at least, in which it comprises a first heat exchanger (E1) comprising at least, or even only, the said third and fourth circuits (20 , 22).

15. Device according to Claim 13 or 14, the heat pump (10) being as defined in Claim 3 at least, in which it comprises a second heat exchanger (E2) comprising at least, or even only, the said first, fifth and tenth circuits (16, 36 and 22').

16. Device according to one of Claims 13 to 15, in which it comprises a third heat exchanger (E3) comprising at least, or even only, said second and seventh circuits (18, 38).

17. Device according to one of the preceding claims, in which the heat pump (10) is configured so that, at the outlet of the said expander (14), the cryogenic fluid has a temperature lower by at least 3°C than the temperature liquefied gas entering said seventh circuit (38).

18. Vessel for transporting liquefied gas, comprising at least one tank (24) for storing this gas and a device according to one of the preceding claims.

19. A method of cooling and/or heating liquefied gas stored in a ship according to claim 18, comprising the steps of:
a) taking liquefied gas from the tank (24) and circulating it in said seventh circuit (38) in order to modify its temperature, then
b) reinjecting this liquefied gas into the tank, in the upper part and/or in the bottom of the tank (24).

20. A method according to claim 19, comprising the steps of:
c) taking natural evaporation gas from the tank (24) and circulating it in said fifth circuit (36) in order to increase its temperature, and/or
d) taking liquefied gas from the tank (24) and circulating it in said sixth circuit (46) in order to vaporize it and increase its temperature.

21. A method according to claim 20, the device being as defined in claim 8 or 9, comprising the steps of:
e) supplying said at least one compressor (48) configured to supply gas to at least one machine (58, 60, 64) of said ship, with gas leaving said fifth circuit (36) and/or said sixth circuit (46), And
f) optionally taking part of the gas at the outlet of said at least one compressor and circulating this gas in said eighth circuit (50), or even in said ninth circuit (52), in order to cool it.

22. Method according to both of claims 19 and 20, in which steps a), b) and c) are carried out simultaneously when said ship is at a cruising speed, corresponding for example to a cruising speed, liquefied gas being reinjected at the bottom of the tank in step b).

23. Method according to all of claims 19 to 21, in which steps a), b), c), e), f) and g) are carried out simultaneously when said ship is at a low speed, corresponding for example to a speed much lower than a predetermined threshold, liquefied gas circulating in said seventh circuit (38) with a view to its heating and its mixing with the gas leaving said ninth circuit (52), before its reinjection into the tank in step b), preferably at the bottom of the tank.

24. Method according to one of claims 19 to 23, further comprising:
- a step of using at least one compressor (48) to compress gas with a view to supplying gas to at least one machine (58, 60, 64) of the ship, and
- a step of using the same at least one compressor (48) to compress cryogenic fluid in the heat pump (10).
